# EUROPEAN PATENT APPLICATION

(11) **EP 4 063 116 A1**
(43) Date of publication of application: **28.09.2022**
(21) Application number: 20890401.1
(22) Date of filing: 18.11.2020
(51) Int. Cl.: B32B 9/00, B32B 27/00, B32B 27/36, B65D 65/40, C08L 67/02, C08J 7/048

(54) **VAPOR DEPOSITION RESIN FILM, LAMINATE PROVIDED WITH VAPOR DEPOSITION RESIN FILM, AND PACKAGING CONTAINER PROVIDED WITH LAMINATE**

(30) Priority: 19.11.2019 JP 2019208818; 19.11.2019 JP 2019208867; 19.11.2019 JP 2019208901; 03.07.2020 JP 2020115436; 04.08.2020 JP 2020132659; 04.08.2020 JP 2020132662
(71) Applicant: Dai Nippon Printing Co., Ltd., Tokyo 162-8001 (JP)
(72) Inventor: NAKADA Kiyoshi, Tokyo 162-8001 (JP); ISHIKAWA Shun, Tokyo 162-8001 (JP); TODA Kiyoshi, Tokyo 162-8001 (JP)
(74) Representative: Müller-Boré & Partner Patentanwälte PartG mbB
(86) International application number: PCT/JP2020/043024
(87) International publication number: WO 2021/100770

(57) **Abstract**

A vapor-deposited resin film according to the present invention includes a polyester film and a vapor-deposited film, wherein the polyester film contains a chemically recycled polyester, and a region with a molecular weight of 1,000 or less in a molecular weight distribution curve measured by GPC of the polyester film is 1.8% or less by area of a total peak area.

## Description

### Technical Field

The present invention relates to a vapor-deposited resin film, a laminate including the vapor-deposited resin film, and a packaging container including the laminate.

### Background Art

Films composed of a resin material (resin films) have been used as substrates constituting laminates used to produce packaging containers, such as packaging bags (hereinafter referred to as substrates for packaging materials). For example, polyester films are widely used as such films due to their good mechanical characteristics, chemical stability, heat resistance, transparency, and low prices.

The fossil fuel polyesters used to produce polyester films are copolymers of a dicarboxylic acid compound and a diol compound. These compounds are produced from petroleum, a fossil fuel.

In recent years, for environmental load reduction, such as carbon dioxide emission reduction, packaging containers have been produced by using polyesters produced by mechanically recycling polyesters contained in used packaging containers (hereinafter referred to as mechanically recycled polyesters) instead of fossil fuel polyesters (see Patent Literature 1).

However, the degree of contamination of packaging containers varies with the contents and the storage environment of the packaging containers. Consumers may be concerned about hygiene in packaging containers produced by using mechanically recycled polyesters. From the perspective of hygiene, therefore, the use of chemically recycled polyesters has been studied. Chemically recycled polyesters are produced by decomposing polyesters contained in used packaging containers to a monomer level, removing contaminants, and then polymerizing the monomers again. Thus, chemically recycled polyesters are superior in hygiene.

### Citation List

### Patent Literature

PTL 1: Japanese Unexamined Patent Application Publication No. 2017-007175

### Summary of Invention

### Technical Problem

Laminates used to produce packaging containers as described above include at least a substrate composed of a polyester film and a sealant layer and are stored in a rolled state. The present inventors have found a new problem that when a polyester film used as a substrate or the like contains a low-molecular-weight polymer, the low-molecular-weight polymer may migrate to a sealant layer during storage of a rolled laminate, then the low-molecular-weight polymer may mix with the contents to be contained in a packaging container, and impair the hygiene of the contents.

The present invention has been made to solve these problems. It is an object of the present invention to provide a vapor-deposited resin film that enables the production of a packaging container with a lower environmental load and excellent hygiene.

It is another object of the present invention to provide a laminate including the vapor-deposited resin film.

It is still another object of the present invention to provide a packaging container including the laminate. Solution to Problem

The present invention provides a vapor-deposited resin film including: a polyester film; and a vapor-deposited film,
wherein the polyester film contains a chemically recycled polyester,
the polyester film contains the chemically recycled polyester as a main component, and
a region with a molecular weight of 1,000 or less in a molecular weight distribution curve measured by GPC of the polyester film is 1.8% or less by area of a total peak area.

In a vapor-deposited resin film according to the present invention, the polyester film may contain the chemically recycled polyester as a main component.

In a vapor-deposited resin film according to the present invention, the chemically recycled polyester may be composed of the chemically recycled polyethylene terephthalate.

In a vapor-deposited resin film according to the present invention, the polyester film may include
a first polyester layer containing the chemically recycled polyester as a main component,
a second polyester layer containing the chemically recycled polyester and at least one selected from the group consisting of mechanically recycled polyesters, fossil fuel polyesters, and biomass polyesters, and
a third polyester layer containing the chemically recycled polyester as a main component.

In a vapor-deposited resin film according to the present invention, each layer of the polyester film may have a polyester content of 90% or more by mass and 100% or less by mass.

In a vapor-deposited resin film according to the present invention, the polyester film may contain the chemically recycled polyester and at least one selected from the group consisting of mechanically recycled polyesters, fossil fuel polyesters, and biomass polyesters.

In a vapor-deposited resin film according to the present invention, the chemically recycled polyester, the mechanically recycled polyesters, the fossil fuel polyesters, and the biomass polyesters may be polyethylene terephthalate.

In a vapor-deposited resin film according to the present invention, the polyester film may have a melting point of 250°C or less.

In a vapor-deposited resin film according to the present invention, the polyester film may have a crystallization temperature of 196°C or less.

In a vapor-deposited resin film according to the present invention, a surface of the polyester film on which no vapor-deposited film is formed may have a static friction coefficient of 0.35 or more.

In a vapor-deposited resin film according to the present invention, the polyester film may have a polyester content of 90% or more by mass and 100% or less by mass.

The present invention provides a laminate that includes the vapor-deposited resin film and
a sealant layer or a sticky adhesive layer inside the vapor-deposited resin film.

In a laminate according to the present invention, the laminate may include a substrate layer, a vapor-deposited film, an intermediate layer, and the sealant layer or the sticky adhesive layer, and
the substrate layer and the vapor-deposited film may be composed of the vapor-deposited resin film.

In a laminate according to the present invention, the laminate may include a substrate layer, a vapor-deposited film, an intermediate layer, and the sealant layer or the sticky adhesive layer,
the intermediate layer may include a support layer, and
the support layer and the vapor-deposited film may be composed of the vapor-deposited resin film.

The present invention provides a packaging container including the laminate.

### Advantageous Effects of Invention

The present invention can provide a vapor-deposited resin film that enables the production of a packaging container with a lower environmental load and excellent hygiene.

The present invention can provide a laminate including the vapor-deposited resin film.

The present invention can provide a packaging container including the laminate.

### Brief Description of Drawings

[Fig. 1] Fig. 1 is a schematic cross-sectional view of an embodiment of a vapor-deposited resin film 10 according to the present invention.
[Fig. 2] Fig. 2 is a schematic cross-sectional view of an embodiment of the vapor-deposited resin film 10 according to the present invention.
[Fig. 3] Fig. 3 is a schematic cross-sectional view of an embodiment of a laminate 20 according to the present invention.
[Fig. 4] Fig. 4 is a schematic cross-sectional view of an embodiment of the laminate 20 according to the present invention.
[Fig. 5] Fig. 5 is a schematic cross-sectional view of an embodiment of the laminate 20 according to the present invention.
[Fig. 6] Fig. 6 is a perspective view of an embodiment of a standing pouch 30 produced by using the laminate 20 according to the present invention.
[Fig. 7] Fig. 7 is a front view of an embodiment of a pillow bag 40 produced by using the laminate 20 according to the present invention.
[Fig. 8] Fig. 8 is a front view of an embodiment of a three sided sealed bag 50 produced by using the laminate 20 according to the present invention.
[Fig. 9] Fig. 9 is a front view of an embodiment of a four sided sealed bag 60 produced by using the laminate 20 according to the present invention.
[Fig. 10] Fig. 10 is a schematic cross-sectional view of an embodiment of a lid material 70 produced by using the laminate 20 according to the present invention.
[Fig. 11] Fig. 11 is a partial cross-sectional view of an embodiment of a laminated tube 80 produced by using the laminate 20 according to the present invention.
[Fig. 12] Fig. 12 is a perspective view of an embodiment of a paper container 90 produced by using the laminate 20 according to the present invention.
[Fig. 13] Fig. 13 is a perspective view of an embodiment of a paper cup 100 produced by using the laminate 20 according to the present invention.
[Fig. 14] Fig. 14 is a schematic view for explaining a method for producing the paper cup 100 illustrated in Fig. 13.
[Fig. 15] Fig. 15 is a graph of a molecular weight distribution curve of a region with a molecular weight of 1,000 or less obtained in Examples.

### Description of Embodiments

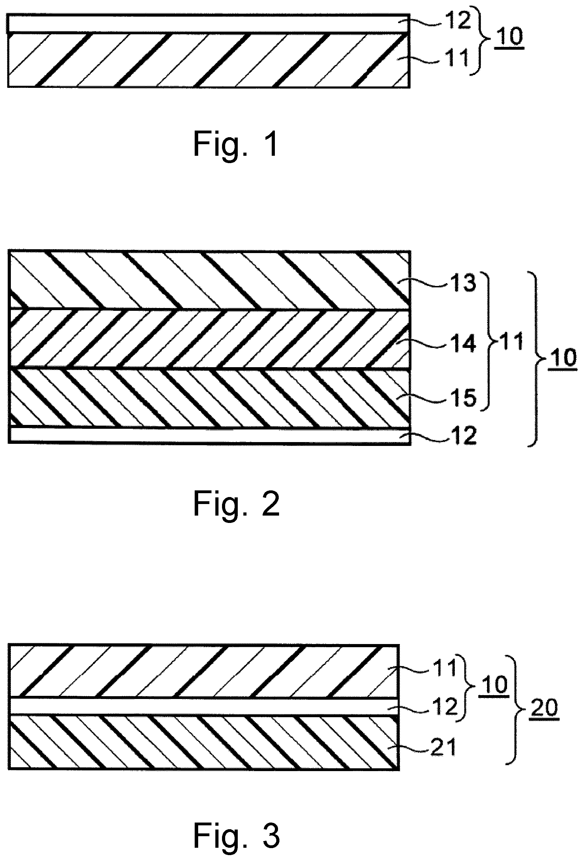

An embodiment of the present invention is described with reference to Figs. 1 to 15. In the accompanying drawings of the present description, for the sake of illustration and clarity, the scale, the aspect ratio, and the like are appropriately changed and exaggerated from those of real things.

Terms, such as "parallel", "perpendicular", and "the same", and lengths and angles used in the present description to specify shapes, geometric conditions, and degrees thereof do not necessarily have their strict meanings and are interpreted to include ranges in which similar functions can be expected.

The term "inside", as used herein, refers to the side of the contents of a packaging container produced, and the term "outside", as used herein, refers to the side opposite the inside.

### (Vapor-Deposited Resin Film 10)

As illustrated in Fig. 1, a vapor-deposited resin film 10 according to the present invention includes a polyester film 11 and a vapor-deposited film 12.

As illustrated in Fig. 2, the polyester film 11 may include at least a first polyester layer 13, a second polyester layer 14, and a third polyester layer 15.

In one embodiment, the vapor-deposited resin film 10 includes the polyester film 11, the vapor-deposited film 12, and a gas barrier coating film in order, and the gas barrier coating film may be adjacent to the vapor-deposited film 12 (not shown).

### (Polyester Film 11)

The polyester film 11 contains a chemically recycled polyester. This can improve the environmental load reduction of the vapor-deposited resin film 10 and a laminate 20 including the vapor-deposited resin film 10 and provide gas barrier properties equivalent to those of known fossil fuel polyester films. The polyester film 11 may be a monolayer or multilayer film.

The polyester film 11 preferably contains 90% or more by mass and 100% or less by mass, more preferably 95% or more by mass and 100% or less by mass, of polyester.

The polyester film 11 may contain a resin material other than polyesters without losing the features of the present invention. Examples of the resin material other than polyesters include (meth)acrylic resins, polyolefins, vinyl resins, cellulose resins, and ionomer resins.

The amount of the resin material other than polyesters in the polyester film 11 is preferably 10% or less by mass, preferably 5% or less by mass, preferably 1% or less by mass. Particularly preferably, the polyester film 11 contains no resin material other than polyesters.

The term "polyester", as used herein, refers to a product of a polycondensation reaction between a diol compound and a dicarboxylic acid compound.

Examples of the dicarboxylic acid compound include malonic acid, succinic acid, glutaric acid, adipic acid, suberic acid, sebacic acid, dodecanedioic acid, eicosanedioic acid, pimelic acid, azelaic acid, methylmalonic acid, and ethylmalonic acid, adamantanedicarboxylic acid, norbornenedicarboxylic acid, cyclohexanedicarboxylic acid, decalindicarboxylic acid, terephthalic acid, isophthalic acid, phthalic acid, 1,4-naphthalenedicarboxylic acid, 1,5-naphthalenedicarboxylic acid, 2,6-naphthalenedicarboxylic acid, 1,8-naphthalenedicarboxylic acid, 4,4'-diphenyldicarboxylic acid, 4,4'-diphenyl ether dicarboxylic acid, sodium 5-sulfoisophthalate, phenylindane dicarboxylic acid, anthracenedicarboxylic acid, phenanthrenedicarboxylic acid, 9,9'-bis(4-carboxyphenyl)fluorene acid, and ester derivatives thereof.

Examples of the diol compound include ethylene glycol, 1,2-propanediol, 1,3-propanediol, butanediol, 2-methyl-1,3-propanediol, hexanediol, neopentyl glycol, cyclohexanedimethanol, cyclohexanediethanol, decahydronaphthalenedimethanol, decahydronaphthalenediethanol, norbornanedimethanol, norbornanediethanol, tricyclodecanedimethanol, tricyclodecaneethanol, tetracyclododecanedimethanol, tetracyclododecanediethanol, decalindimethanol, decalindiethanol, 5-methylol-5-ethyl-2-(1,1-dimethyl-2-hydroxyethyl)-1,3-dioxane, cyclohexanediol, bicyclohexyl-4,4'-diol, 2,2-bis(4-hydroxycyclohexylpropane), 2,2-bis(4-(2-hydroxyethoxy)cyclohexyl)propane, cyclopentanediol, 3-methyl-1,2-cyclopentadiol, 4-cyclopentene-1,3-diol, adamantanediol, p-xylene glycol, bisphenol A, bisphenol S, styrene glycol, trimethylolpropane, and pentaerythritol.

The polyester may contain a monomer unit other than the dicarboxylic unit and the diol unit without losing the features of the present invention.

The term "chemically recycled polyester", as used herein, refers to a polyester produced by collecting used polyester (for example, at least one polyester selected from the group consisting of fossil fuel polyesters, biomass polyesters, chemically recycled polyesters, and mechanically recycled polyesters) containers, performing pulverization and washing, removing foreign materials, forming flakes or pellets, for example, depolymerizing the flakes or pellets with ethylene glycol into bis-β-hydroxyethyl terephthalate (BHET), and polymerizing BHET as a raw material. The decomposition method and the like are not limited to this.

The term "mechanically recycled polyester", as used herein, refers to flakes or pellets recycled by collecting used polyester (for example, at least one polyester selected from the group consisting of fossil fuel polyesters, biomass polyesters, chemically recycled polyesters, and mechanically recycled polyesters) containers, performing pulverization and washing, and removing foreign materials. The decomposition method and the like are not limited to this.

The term "fossil fuel polyester", as used herein, refers to a polyester containing a fossil-fuel-derived diol as a diol unit and a fossil-fuel-derived dicarboxylic acid as a dicarboxylic acid unit.

The term "biomass polyester", as used herein, refers to a polyester containing a biomass-derived ethylene glycol as a diol unit and a fossil-fuel-derived dicarboxylic acid as a dicarboxylic acid unit, or a polyester containing a biomass-derived ethylene glycol and a fossil-fuel-derived diol as diol units and a fossil-fuel-derived dicarboxylic acid as a dicarboxylic acid unit.

Carbon dioxide in the atmosphere contains a certain amount of C14 (105.5 pMC). It is therefore known that the C14 content of plants that grow by taking carbon dioxide from the atmosphere, for example, maize, is also approximately 105.5 pMC. It is also known that fossil fuels contain almost no C14. Thus, the ratio of biomass-derived carbon can be calculated by measuring the ratio of C14 to the total carbon atoms in polyester. For example, polyethylene terephthalate is produced by polymerizing ethylene glycol containing two carbon atoms and terephthalic acid containing eight carbon atoms in a mole ratio of 1:1. When only a biomass-derived ethylene glycol is used as ethylene glycol, the weight ratio of the biomass-derived component in the polyester is 31.25%, and the theoretical degree of biomass is 31.25%.

A vapor-deposited resin film according to the present invention is characterized in that a region with a molecular weight of 1,000 or less in a molecular weight distribution curve measured by gel permeation chromatography (GPC) of the polyester film 11 is 1.8% or less by area of the total peak area. The polyester film 11, which has a smaller amount of component with a molecular weight of 1,000 or less (hereinafter also referred to as a low-molecular-weight component), can prevent the low-molecular-weight component from mixing into the contents in a packaging container and can improve the hygiene of a packaging container produced by using a vapor-deposited resin film according to the present invention.

The region with a molecular weight of 1,000 or less is preferably 1.7% or less by area, more preferably 1.5% or less by area, still more preferably 1.35% or less by area, of the total peak area.

Although the region with a molecular weight of 1,000 or less preferably has a smaller area ratio with respect to the total peak area in terms of hygiene, the region with a molecular weight of 1,000 or less may be, for example, 0.01% or more by area of the total peak area.

GPC measurement of the polyester film 11 is performed in accordance with JIS K 7252-1: 2008.

More specifically, 10 g of the polyester film 11 is cut out and weighed in a 30-mL vial. A HFIP/chloroform liquid mixture is added to the vial and is allowed to stand for 12 hours for dissolution.

After standing, chloroform is added for dilution to prepare a 0.1% solution.

This solution is filtered through a 0.45-µm hydrophilic PTFE membrane filter cartridge (Millex-LH manufactured by Merck Millipore), and the filtrate is subjected to GPC measurement under the following conditions.

### (Measurement Conditions)

- Columns used: two PLgel 5µ MIXED (7.5 mm x 300 mm) manufactured by Agilent Technologies
- Column temperature: 40°C
- Mobile phase: chloroform (manufactured by FUJIFILM Wako Pure Chemical Corporation, for liquid chromatography)
- Flow rate: 1.0 mL/min
- Injection volume: 2.5 µL
- Detection: 254 nm (UV-visible detector)
- Molecular weight calibration: monodisperse polystyrene (PS-1 manufactured by Agilent Technologies)
- Apparatus: 515 HPLC pump, 717 plus automatic injector, UV-visible detector (manufactured by Waters Corporation)

The polyester film 11 preferably has a melting point of 250°C or less, more preferably 248.5°C or less. This can increase the film-forming speed, that is, improve the film-forming properties of the polyester film 11.

The polyester film 11 preferably has a melting point of 230°C or more, more preferably 240°C or more. This can improve the heat resistance of the polyester film 11.

The polyester film 11 preferably has a crystallization temperature of 196°C or less, more preferably 195°C or less. This can improve the stretching stability, that is, the film-forming properties of the polyester film 11.

The polyester film 11 preferably has a crystallization temperature of 185°C or more, more preferably 190°C or more. This can improve the heat resistance of the polyester film 11.

In the present description, the "melting point" and the "crystallization temperature" are measured by differential scanning calorimetry (DSC) according to JIS K 7121: 2012, as described below.

First, (1) a polyester film sample (5 mg) is heated from 20°C to 300°C at a rate of 10°C/min. (2) The sample is then held at 300°C for 5 minutes. (3) The sample is then cooled from 300°C to 20°C at a rate of -10°C/min. (4) The sample is then held at 20°C for 5 minutes. (5) The sample is heated again from 20°C to 300°C at a rate of 10°C/min. Thus, a melting curve is obtained.

A main peak in the cooling stage of this melting curve was taken as a crystallization temperature, and a main peak in the second heating stage was taken as a melting point.

The surface of the polyester film 11 on which no vapor-deposited film is formed preferably has a static friction coefficient of 0.35 or more, more preferably 0.40 or more. This can prevent excessive sliding on the surface of a packaging container produced by using a vapor-deposited resin film according to the present invention and improve stacking stability.

The surface of the polyester film 11 on which no vapor-deposited film is formed preferably has a static friction coefficient of 0.60 or less, more preferably 0.50 or less. This stabilizes running performance in a packaging machine and improves high-speed filling and packaging properties.

The static friction coefficient of the polyester film 11 can be measured in accordance with JIS K 7125: 1999, as described below.

First, the vapor-deposited resin film 10 is cut to form a 200 mm x 150 mm test specimen.

The test specimen is then fixed to a sliding table of a testing machine with a cellophane adhesive tape such that the polyester film 11 faces upward.

The vapor-deposited resin film 10 is then cut into 70 mm x 100 mm to prepare a test specimen.

The test specimen is then wound around a 63 mm x 63 mm x 6.3 mm metal thread (weight: 200 g) such that the vapor-deposited film is located inside and the polyester film 11 is located outside.

The test specimen is then placed on the fixed vapor-deposited resin film 10 such that the polyester films 11 are in contact with each other.

In an environment of 23°C and 50% relative humidity, the metal thread around which the test specimen is wound is then slid at a speed of 100 mm/min and is measured with a friction measuring instrument.

In the vapor-deposited resin film 10 according to the present invention, the cyclic trimer content of the polyester film 11 is preferably 0.510% or more by mass and 1.030% or less by mass, more preferably 0.600% or more by mass and 1.010% or less by mass, still more preferably 0.650% or more by mass and 1.000% or less by mass. At a cyclic trimer content in such a range, the polyester film 11 with the above melting point and crystallization temperature and a vapor-deposited resin film with the above static friction coefficient can be suitably produced.

The cyclic trimer content of the polyester film 11 can be measured by the following method.

Approximately 0.1 g of a sample is taken from the polyester film 11 and is dissolved in a liquid mixture of hexafluoroisopropanol (HFIP) and chloroform. Acetonitrile is added to this solution to precipitate a polymer, and the precipitate is filtered. The filtrate is evaporated to dryness, and the residue is dissolved in dimethylformamide (DMF). This solution is analyzed by high-performance liquid chromatography (HPLC) to determine the cyclic trimer content. The measurement conditions are as follows:

### (Measurement Conditions)

- Apparatus: LC-20 manufactured by Shimadzu Corporation
- Column used: Develosil ODS-HG-33µ (4.6 x 150 mm) manufactured by Nomura Chemical Co., Ltd.
- Column temperature: 40°C
- Mobile phase: 0.5% by volume aqueous acetic acid/acetonitrile (gradient)
- Flow rate: 1.0 mL/min
- Injection volume: 15 µL
- Detection: 254 nm (UV-visible detector)
- Apparatus: LC-20 manufactured by Shimadzu Corporation

The polyester film 11 may be an oriented film or an unoriented film. The polyester film 11 is preferably an oriented film in terms of heat resistance, strength, and transparency. The oriented film may be a uniaxially oriented film or a biaxially oriented film. The oriented film is preferably a biaxially oriented film in terms of dimensional stability.

The polyester film 11 may be surface-treated. This can improve adhesiveness to an adjacent layer. The surface treatment method is, but not limited to, corona treatment, ozone treatment, or frame treatment, for example.

The polyester film 11 may contain an additive agent without losing the features of the present invention. Examples of the additive agent include oxygen absorbers, plasticizers, ultraviolet stabilizers, oxidation inhibitors, anti-coloring agents, matting agents, deodorants, flame retardants, weathering agents, antistatic agents, friction reducing agents, slip agents, release agents, antioxidants, ion exchangers, anti-blocking agents, and colorants.

The polyester film 11 preferably has a thickness of 3 µm or more and 25 µm or less, more preferably 6 µm or more and 25 µm or less, still more preferably 7 µm or more and 16 µm or less, still more preferably 9 µm or more and 16 µm or less. This can improve the vapor-deposited film formability, heat resistance, and strength of the polyester film 11.

In one embodiment, the polyester film 11 contains a chemically recycled polyester as a main component.

The polyester film 11 according to the present embodiment is described in detail below.

In the present embodiment, the phrase "the polyester film 11 contains a chemically recycled polyester as a main component" means that the polyester film 11 contains 50% or more by mass of the chemically recycled polyester with respect to the solid content (100% by mass) of the polyester film 11.

The chemically recycled polyester content of the polyester film 11 is preferably 60% or more by mass and 100% or less by mass, more preferably 70% or more by mass and 100% or less by mass.

The chemically recycled polyester contained in the polyester film 11 is particularly preferably chemically recycled polyethylene terephthalate in terms of transparency and easy collection of used polyester containers serving as a raw material. Polyethylene terephthalate containers are collected as used polyester containers.

The polyester film 11 may contain two or more chemically recycled polyesters.

The polyester film 11 may contain a resin material other than the chemically recycled polyester (hereinafter referred to as another resin material). Examples of the other resin material include fossil fuel polyesters, biomass polyesters, mechanically recycled polyesters, (meth)acrylic resins, polyolefins, vinyl resins, cellulose resins, and ionomer resins.

The amount of the other resin material in the polyester film 11 is preferably 10% or less by mass, preferably 5% or less by mass, preferably 1% or less by mass. Particularly preferably, the polyester film 11 contains no resin material other than polyesters.

In another embodiment, the polyester film 11 contains the chemically recycled polyester and at least one selected from the group consisting of mechanically recycled polyesters, fossil fuel polyesters, and biomass polyesters.

The polyester film 11 according to the present embodiment is described in detail below.

Although the polyester film 11 may have any chemically recycled polyester content as long as the area percentage of the region with a molecular weight of 1,000 or less in a molecular weight distribution curve measured by GPC of the polyester film 11 is satisfied, the chemically recycled polyester content is preferably 20% or more by mass and 99% or less by mass, more preferably 30% or more by mass and 95% or less by mass, still more preferably 50% or more by mass and 90% or less by mass.

The polyester film 11 may contain two or more chemically recycled polyesters.

Although the sum of the mechanically recycled polyester, fossil fuel polyester, and biomass polyester contents of the polyester film 11 is not particularly limited as long as the area percentage of the region with a molecular weight of 1,000 or less in a molecular weight distribution curve measured by GPC of the polyester film 11 is satisfied, the sum is preferably 1% or more by mass and 80% or less by mass, more preferably 5% or more by mass and 70% or less by mass, still more preferably 10% or more by mass and 50% or less by mass.

The chemically recycled polyester and at least one polyester selected from mechanically recycled polyesters, fossil fuel polyesters, and biomass polyesters contained in the polyester film 11 are preferably polyethylene terephthalate in terms of transparency and easy collection of used polyester containers as a raw material. Used polyethylene terephthalate containers are collected as used polyester containers.

In another embodiment, the polyester film 11 includes the first polyester layer 13 containing a chemically recycled polyester as a main component,
the second polyester layer 14 containing a chemically recycled polyester and at least one selected from the group consisting of mechanically recycled polyesters, fossil fuel polyesters, and biomass polyesters, and
the third polyester layer 15 containing a chemically recycled polyester as a main component.

When the polyester film 11 according to the present invention is used for a packaging container, the first polyester layer 13 may be located inside the second polyester layer or may be located outside the second polyester layer.

Without losing the features of the present invention, a plurality of polyester layers, such as fourth, fifth, and sixth polyester layers, (referred to as other polyester layers) may be provided on the first polyester layer 13 or under the third polyester layer 15, and the polyester film 11 may have a structure of four or more layers.

The other polyester layers may contain a chemically recycled polyester as a main component or may contain a chemically recycled polyester and at least one selected from the group consisting of mechanically recycled polyesters, fossil fuel polyesters, and biomass polyesters.

The polyester film 11 according to the present embodiment is described in detail below.

In the present embodiment, the phrase "contains a chemically recycled polyester as a main component" refers to containing 50% or more by mass of the chemically recycled polyester with respect to the solid content (100% by mass) of the first polyester layer or the second polyester layer.

The chemically recycled polyester content of the first polyester layer 13 is preferably 80% or more by mass and 100% or less by mass, more preferably 90% or more by mass and 100% or less by mass.

The first polyester layer 13 preferably contains 90% or more by mass and 100% or less by mass, more preferably 95% or more by mass and 100% or less by mass, of polyester.

The chemically recycled polyester contained in the first polyester layer 13 is particularly preferably chemically recycled polyethylene terephthalate in terms of transparency and easy collection of used polyester containers as a raw material. Used polyethylene terephthalate containers are collected as used polyester containers.

The first polyester layer 13 may contain two or more chemically recycled polyesters.

The first polyester layer 13 may contain another resin material without losing the features of the present invention.

The other resin material content of the first polyester layer 13 is preferably 10% or less by mass, preferably 5% or less by mass, preferably 1% or less by mass, particularly preferably 0% by mass.

The first polyester layer 13 may contain an additive agent without losing the features of the present invention. Examples of the additive agent include oxygen absorbers, plasticizers, ultraviolet stabilizers, oxidation inhibitors, anti-coloring agents, matting agents, deodorants, flame retardants, weathering agents, antistatic agents, friction reducing agents, slip agents, release agents, antioxidants, ion exchangers, anti-blocking agents, and colorants.

The first polyester layer 13 preferably has a thickness of 1 µm or more and 12 µm or less, preferably 2 µm or more and 6 µm or less. This provides an appropriate thickness and a layer ratio close to a symmetrical shape and improves the stability of film-forming properties and physical properties.

The second polyester layer 14 contains the chemically recycled polyester and at least one selected from the group consisting of mechanically recycled polyesters, fossil fuel polyesters, and biomass polyesters.

Although the second polyester layer 14 may have any chemically recycled polyester content as long as the area percentage of the region with a molecular weight of 1,000 or less in a molecular weight distribution curve measured by GPC of the polyester film 11 is satisfied, the chemically recycled polyester content is preferably 20% or more by mass and 99% or less by mass, preferably 50% or more by mass and 99% or less by mass.

The second polyester layer 14 may contain two or more chemically recycled polyesters.

Although the sum of the mechanically recycled polyester, fossil fuel polyester, and biomass polyester contents of the second polyester layer 14 is not particularly limited as long as the area percentage of the region with a molecular weight of 1,000 or less in a molecular weight distribution curve measured by GPC of the polyester film 11 is satisfied, the sum is preferably 1% or more by mass and 80% or less by mass, preferably 1% or more by mass and 50% or less by mass.

The second polyester layer 14 preferably contains 90% or more by mass and 100% or less by mass, more preferably 95% or more by mass and 100% or less by mass, of polyester.

The chemically recycled polyester and at least one polyester selected from the group consisting of mechanically recycled polyesters, fossil fuel polyesters, and biomass polyesters contained in the second polyester layer 14 are preferably polyethylene terephthalate in terms of transparency and easy collection of used polyester containers as a raw material. Used polyethylene terephthalate containers are collected as used polyester containers.

The second polyester layer 14 may contain a resin material other than polyesters without losing the features of the present invention. Examples of the resin material other than polyesters include (meth)acrylic resins, polyolefins, vinyl resins, cellulose resins, and ionomer resins.

The amount of the resin material other than polyesters in the second polyester layer 14 is preferably 10% or less by mass, preferably 5% or less by mass, preferably 1% or less by mass. Particularly preferably, the second polyester layer 14 contains no resin material other than polyesters.

The second polyester layer 14 may contain an additive agent without losing the features of the present invention. Examples of the additive agent include oxygen absorbers, plasticizers, ultraviolet stabilizers, oxidation inhibitors, anti-coloring agents, matting agents, deodorants, flame retardants, weathering agents, antistatic agents, friction reducing agents, slip agents, release agents, antioxidants, ion exchangers, anti-blocking agents, and colorants.

The second polyester layer 14 preferably has a thickness of 1 µm or more and 12 µm or less, preferably 2 µm or more and 6 µm or less. This provides an appropriate thickness and a layer ratio close to a symmetrical shape and improves the stability of film-forming properties and physical properties.

The chemically recycled polyester content of the third polyester layer 15 is preferably 80% or more by mass and 100% or less by mass, more preferably 90% or more by mass and 100% or less by mass.

The third polyester layer 15 preferably contains 90% or more by mass and 100% or less by mass, more preferably 95% or more by mass and 100% or less by mass, of polyester.

The chemically recycled polyester contained in the third polyester layer 15 is particularly preferably chemically recycled polyethylene terephthalate in terms of transparency and easy collection of used polyester containers as a raw material. Used polyethylene terephthalate containers are collected as used polyester containers.

The third polyester layer 15 may contain two or more chemically recycled polyesters.

The third polyester layer 15 may contain another resin material without losing the features of the present invention.

The other resin material content of the third polyester layer 15 is preferably 10% or less by mass, preferably 5% or less by mass, preferably 1% or less by mass. Particularly preferably, the third polyester layer 15 contains no other resin material.

The third polyester layer 15 may contain an additive agent without losing the features of the present invention. Examples of the additive agent include oxygen absorbers, plasticizers, ultraviolet stabilizers, oxidation inhibitors, anti-coloring agents, matting agents, deodorants, flame retardants, weathering agents, antistatic agents, friction reducing agents, slip agents, release agents, antioxidants, ion exchangers, anti-blocking agents, and colorants.

The third polyester layer 15 preferably has a thickness of 1 µm or more and 12 µm or less, preferably 2 µm or more and 6 µm or less. This provides an appropriate thickness and a layer ratio close to a symmetrical shape and improves the stability of film-forming properties and physical properties.

The structure of the third polyester layer 15 may be the same as or different from the structure of the first polyester layer 13.

### (Method for Producing Polyester Film 11)

The polyester film 11 in which the region with a molecular weight of 1,000 or less in a molecular weight distribution curve measured by GPC is 1.8% or less by area of the total peak area can be produced by appropriately selecting the types of raw material monomers and oligomers and/or by appropriately adjusting the raw material monomer and oligomer contents. Furthermore, the low-molecular-weight component functions as wax, and therefore the low-molecular-weight component content can be adjusted to adjust the friction of the polyester film 11.

In one embodiment, for example, a compound containing isophthalic acid or the like as a dicarboxylic acid compound can be used to adjust the crystallization temperature and melting point of the polyester film 11.

A film can be produced by any method, for example, by a known method, such as a T-die method.

When the polyester film 11 is a multilayer film, the polyester film 11 is preferably produced by coextrusion, which can be performed by a T-die method, for example. The polyester film 11 may be formed by coextrusion with a thermoplastic resin interposed between the first polyester layer 13 and the second polyester layer 14 and/or between the second polyester layer 14 and the third polyester layer 15.

### (Vapor-Deposited Film 12)

The vapor-deposited resin film 10 according to the present invention includes the vapor-deposited film 12 on at least one surface of the polyester film 11. When the polyester film 11 includes the first polyester layer 13, the second polyester layer 14, and the third polyester layer 15, the polyester film 11 includes the vapor-deposited film 12 on at least one surface of the first polyester layer 13 and the third polyester layer 15.

The vapor-deposited film 12 may be located inside or outside of the polyester film 11.

The vapor-deposited film 12 in the vapor-deposited resin film 10 according to the present invention can improve gas barrier properties, more specifically, oxygen barrier properties and moisture barrier properties.

The vapor-deposited film 12 can be, for example, a vapor-deposited film of inorganic substance(s) or inorganic oxide(s) of one or two or more of silicon (Si), aluminum (Al), magnesium (Mg), calcium (Ca), potassium (K), tin (Sn), sodium (Na), boron (B), titanium (Ti), lead (Pb), zirconium (Zr), and yttrium (Y). The vapor-deposited film 12 may have a structure of two or more layers. The two or more layers may be composed of the same material or different materials.

The vapor-deposited film 12 preferably has a thickness of 10 nm or more and 200 nm or less, more preferably 20 nm or more and 100 nm or less.

The vapor-deposited film 12 may be formed by any method, for example, by a physical vapor deposition method (PVD method), such as a vacuum deposition method, a sputtering method, or an ion plating method, or by a chemical vapor deposition method (CVD method), such as a plasma chemical vapor deposition method, a thermal chemical vapor deposition method, or a photochemical vapor deposition method.

### (Gas Barrier Coating Film)

The vapor-deposited resin film 10 according to the present invention may include a gas barrier coating film adjacent to one surface of the vapor-deposited film 12. The gas barrier coating film functions as a layer for reducing the permeation of oxygen gas, water vapor, and the like. In particular, when the vapor-deposited film 12 is a transparent vapor-deposited film composed of a metal oxide, such as silicon oxide, this effect is remarkably exhibited.

The gas barrier coating film contains at least one alkoxide represented by the general formula R¹ₙM(OR²)ₘ (wherein R¹ and R² denote an organic group having 1 to 8 carbon atoms, M denotes a metal atom, n denotes an integer of 0 or more, m denotes an integer of 1 or more, and n + m is the valence of M), and a polyvinyl alcohol resin and/or an ethylene-vinyl alcohol copolymer. The gas barrier coating film is formed from a gas barrier composition that is polycondensed by the sol-gel method in the presence of a sol-gel method catalyst, an acid, water, and an organic solvent.

The alkoxide represented by the general formula R¹ₙM(OR²)ₘ may be at least one of a partial hydrolysate of the alkoxide and a hydrolytic condensate of the alkoxide. All alkoxy groups of the partial hydrolysate of the alkoxide are not necessarily hydrolyzed. One or more of the alkoxy groups may be hydrolyzed, or the partial hydrolysate may be a mixture thereof. The hydrolytic condensate of the alkoxide may be a dimer or multimer, more specifically, one of dimers to hexamers of partially hydrolyzed alkoxide.

In the alkoxide represented by the general formula R¹ₙM(OR²)ₘ, the metal atom denoted by M may be silicon, zirconium, titanium, aluminum, or the like. In the present embodiment, preferred metals are silicon and titanium, for example. In the present invention, the alkoxide may be used alone or in a mixture of alkoxides of two or more different metal atoms in a solution.

In the alkoxide represented by the general formula R¹ₙM(OR²)ₘ, specific examples of the organic group denoted by R¹ include alkyl groups, such as a methyl group, an ethyl group, a n-propyl group, an i-propyl group, a n-butyl group, an i-butyl group, a sec-butyl group, a t-butyl group, a n-hexyl group, a n-octyl group, and other alkyl groups. In the alkoxide represented by the general formula R¹ₙM(OR²)ₘ, specific examples of the organic group denoted by R² include alkyl groups, such as a methyl group, an ethyl group, a n-propyl group, an i-propyl group, a n-butyl group, a sec-butyl group, and other alkyl groups. These alkyl groups in a molecule may be the same or different.

To prepare the gas barrier composition, for example, a silane coupling agent or the like may be added. The silane coupling agent may be a known organoalkoxysilane with an organic reactive group. In the present embodiment, in particular, an organoalkoxysilane with an epoxy group is suitably used. More specifically, for example, γ-glycidoxypropyltrimethoxysilane, γ-glycidoxypropylmethyldiethoxysilane, or β-(3,4-epoxycyclohexyl)ethyltrimethoxysilane may be used. Such silane coupling agents may be used alone or in combination.

### (Laminate 20)

As illustrated in Fig. 3, the laminate 20 according to the present invention includes the vapor-deposited resin film 10 and a sealant layer 21 inside the vapor-deposited resin film 10. The sealant layer 21 may constitute the innermost layer of the laminate 20. The vapor-deposited resin film 10 may constitute the outermost layer of the laminate 20. In the laminate 20, the polyester film 11 may constitute the outermost layer (Fig. 3), or the vapor-deposited film 12 may constitute the outermost layer (not shown). When the vapor-deposited resin film 10 includes a gas barrier coating film, the gas barrier coating film may constitute the outermost layer of the laminate 20 (not shown).

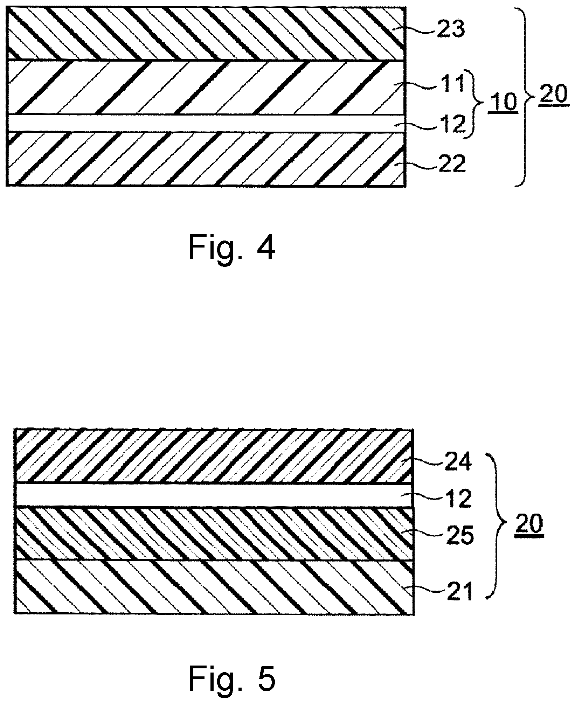

In one embodiment, as illustrated in Fig. 4, the laminate 20 according to the present invention may include a first sealant layer 22 inside the vapor-deposited resin film 10 and a second sealant layer 23 outside the vapor-deposited resin film 10. The first sealant layer 22 may constitute the innermost layer or the outermost layer of the laminate 20. The second sealant layer 23 may constitute the innermost layer or the outermost layer of the laminate 20.

In one embodiment, as illustrated in Fig. 5, the laminate 20 according to the present invention includes a substrate layer 24, the vapor-deposited film 12, an intermediate layer 25, and the sealant layer 21. In the laminate 20, the sealant layer 21 may constitute the innermost layer, and the substrate layer may constitute the outermost layer. The laminate 20 may include an adhesive layer between the vapor-deposited film 12 and the intermediate layer 25.

In one embodiment, the intermediate layer 25 may include a support, a gas barrier layer, or a metal foil (not shown) .

In one embodiment, the laminate 20 according to the present invention may include a print layer on the polyester film 11, on the vapor-deposited film 12, on the substrate layer 24, on a support layer, or the like (not shown).

The laminate 20 according to the present invention may include one or two or more adhesive layers, such as adhesive agent layers, adhesive resin layers, or anchor coating layers, between any layers (not shown).

The laminate 20 according to the present invention may include an optional layer between the vapor-deposited resin film 10 and the sealant layer 21 and outside the vapor-deposited resin film 10 (not shown).

In a laminate according to the present invention and in a packaging container including a laminate according to the present invention, the print layer, the vapor-deposited film, the gas barrier coating film, the adhesive agent layers, the adhesive resin layers, and the anchor coating layers need not be included in the number of layers. For example, for a laminate including a vapor-deposited film, a substrate layer, and a sealant layer, the number of layers of the laminate may be counted as two.

Each layer of a laminate according to the present invention is described below. The vapor-deposited resin film 10 is described above and is not described here.

### (Sealant Layer 21)

The sealant layer 21 contains a resin material that exhibits thermal fusion properties. Examples of the resin material that exhibits thermal fusion properties include low-density polyethylene (LDPE: density 0.910 to 0.925), medium-density polyethylene (MDPE: 0.926 to 0.940), highdensity polyethylene (HDPE: density 0.941 to), linear low-density polyethylene (LLDPE: density 0.910 to 0.925), ethylene-α-olefin copolymers, polypropylene (homopolymers, block polymers, random polymers), ethylene-vinyl acetate copolymers (EVA), ethylene-acrylic acid copolymers (EAA), ethylene-ethyl acrylate copolymers (EEA), ethylene-methacrylic acid copolymers (EMAA), ethylene-methyl methacrylate copolymers (EMMA), ionomer resins, heat-sealing ethylene-vinyl alcohol resins, or polyolefin resins, such as copolymerized methylpentene resins, ethylene-propylene copolymers, methylpentene polymers, polybutene polymers, polyethylene, polypropylene, and cyclic olefin copolymers, acid-modified polyolefin resins produced by modifying a polyolefin resin with an unsaturated carboxylic acid, such as acrylic acid, methacrylic acid, maleic acid, maleic anhydride, fumaric acid, or itaconic acid, vinyl resins, and (meth)acrylic resins. The sealant layer 21 may contain two or more of the resin materials.

The sealant layer 21 may be a heat-sealing layer or a hot-melt layer formed using a hot-melt adhesive containing the resin material.

When polyethylene is used for the sealant layer 21, the polyethylene may be biomass polyethylene. This can further reduce environmental load in the production of the laminate 20 according to the present invention.

The biomass polyethylene is produced by using biomass ethanol as a raw material. The biomass polyethylene may be produced by any method, for example, by a known method. Although the biomass polyethylene can be produced using biomass ethanol as a raw material, it is particularly preferable to use biomass-derived fermentation ethanol produced from a plant raw material. The plant raw material may be, but is not limited to, a known plant. Examples include maize, sugarcane, beet, and manioc.

The sealant layer 21 may contain an additive agent without losing the features of the present invention. Examples of the additive agent include oxygen absorbers, plasticizers, ultraviolet stabilizers, oxidation inhibitors, anti-coloring agents, matting agents, deodorants, flame retardants, weathering agents, antistatic agents, friction reducing agents, slip agents, release agents, antioxidants, ion exchangers, anti-blocking agents, and colorants.

The thickness of the sealant layer 21 is preferably appropriately adjusted for the use of the laminate 20 and may be 7 µm or more and 50 µm or less, for example. The sealant layer 21 may be a monolayer or multilayer film.

The laminate 20 according to the present invention may include the sealant layer 21 on the inner surface of the vapor-deposited resin film 10 or include sealant layers (the first sealant layer 22 and the second sealant layer 23) on both the inner surface and the outer surface of the vapor-deposited resin film 10.

The sealant layer 21 on both sides of the vapor-deposited resin film enables the production of a laminated tube, a label, and a packaging container, such as a paper container.

The structure and thickness of the first sealant layer 22 may be the same as or different from those of the second sealant layer 23.

The sealant layer 21 can be formed by melt-extruding and then cooling the resin material on the vapor-deposited resin film 10. An anchor coating layer may be formed on the vapor-deposited resin film 10, and the resin material may be melt-extruded on the anchor coating layer.

The sealant layer 21 can be formed by stacking a film composed of the resin material on the vapor-deposited resin film 10 via an adhesive agent layer using a dry lamination method.

The sealant layer 21 can be formed by stacking a film composed of the resin material on the vapor-deposited resin film 10 via an adhesive resin layer using a melt extrusion lamination method.

The sealant layer 21 can be formed on the vapor-deposited resin film 10 using a hot-melt adhesive or sticky agent.

The sealant layer 21 can be formed by melt-extruding and then cooling the resin material on the substrate layer 24 or a support layer. An anchor coating layer may be formed on the substrate layer 24 or a support layer, and the resin material may be melt-extruded on the anchor coating layer.

The sealant layer 21 can be formed by stacking a film composed of the resin material on the substrate layer 24 or a support layer via an adhesive agent layer or an anchor coating layer using the dry lamination method.

The sealant layer 21 can be formed by stacking a film composed of the resin material on the substrate layer 24 or a support layer via an adhesive resin layer using a melt extrusion lamination method.

The sealant layer 21 can be formed on the vapor-deposited resin film 10 using a hot-melt adhesive or sticky agent.

A laminate according to the present invention may include a sticky adhesive layer instead of the sealant layer 21. The sticky adhesive layer contains a sticky agent. Examples of the sticky agent contained in the sticky adhesive layer include natural rubber, synthetic rubbers, such as styrene-butadiene rubber, acrylonitrile-butadiene rubber, and polyisobutylene rubber, acrylic resins, silicone resins, and polypropylene.

The sticky adhesive layer may contain two or more of the sticky agents.

### (Substrate Layer 24)

The substrate layer 24 functions to hold each layer. The substrate layer 24 preferably provides the laminate 20 with strength for a packaging container. The substrate layer 24 may be a resin film (which may be an oriented film or an unoriented film) containing one or two or more of resin materials, such as polyesters (chemically recycled polyesters, mechanically recycled polyesters, fossil fuel polyesters, and biomass polyesters), (meth)acrylic resins, polyolefins, such as polyethylene, polypropylene, and polymethylpentene, vinyl resins, cellulose resins, ionomer resins, and polyamides, such as nylon 6, nylon 6,6, and poly(m-xylylene adipamide) (MXD6). The resin film is preferably an oriented film. The oriented film may be a uniaxially oriented film or a biaxially oriented film. The oriented film is preferably a biaxially oriented film in terms of dimensional stability.

The substrate layer 24 may be a laminated film formed by stacking these materials.

In one embodiment, the substrate layer 24 is a resin film containing polyester.

In one embodiment, the substrate layer 24 is a resin film containing polyester as a main component, and the polyester content is preferably 90% or more by mass, more preferably 95% or more by mass.

The substrate layer 24 preferably contains recycled polyester as polyester. This can further reduce the environmental load of a packaging container constituted by the laminate 20 according to the present invention.

The substrate layer 24 may be the polyester film 11. This can further reduce environmental load, can effectively prevent the migration of a low-molecular-weight polymer to the sealant layer 21, and can further improve the hygiene of a packaging container produced by using the laminate 20 according to the present invention.

The laminate 20 according to the present invention may include the vapor-deposited film 12 on one surface of the substrate layer 24 and may further include a gas barrier coating film on the vapor-deposited film 12. The substrate layer 24 and the vapor-deposited film 12 may be composed of the vapor-deposited resin film 10.

The substrate layer 24 may be a paper substrate. This enables the production of a packaging container, such as a paper container or a paper cup.

The paper substrate can be appropriately selected from high-quality paper, art paper, coated paper, resin-coated paper, cast-coated paper, paperboard, synthetic paper, impregnated paper, and the like and can be used according to the intended use.

The thickness of the paper substrate is preferably appropriately changed according to the intended use and may be 30 g/m² or more and 400 g/m² or less, for example.

The substrate layer 24 may contain an additive agent without losing the features of the present invention. Examples of the additive agent include oxygen absorbers, plasticizers, ultraviolet stabilizers, oxidation inhibitors, anti-coloring agents, matting agents, deodorants, flame retardants, weathering agents, antistatic agents, friction reducing agents, slip agents, release agents, antioxidants, ion exchangers, anti-blocking agents, and colorants.

The thickness of the support layer is not particularly limited and is preferably appropriately changed according to the intended use of the laminate 20.

The laminate 20 according to the present invention may include a print layer on one surface of the substrate layer 24.

The substrate layer 24 can be stacked via an adhesive layer.

### (Print Layer)

The laminate 20 according to the present invention includes a print layer on any layer, for example, on the polyester film 11, the vapor-deposited film 12, the substrate layer 24, or a support layer.

Any image, such as a letter, a pattern, a symbol, or a combination thereof, may be formed as the print layer.

The print layer may be formed on part or all of the surface of any layer. The print layer may be formed on a plurality of layers.

The print layer can be formed by appropriately selecting and using a known ink. In consideration of environmental load, an ink produced by using a biomass-derived raw material may also be used.

A commercial ink containing a biomass-derived raw material, for example, LP BIO series manufactured by Toyo Ink Co., Ltd. or Finart BM series manufactured by DIC Graphics Co., Ltd. can be used.

The print layer may be formed by any method, for example, by a known printing method, such as a gravure printing method, an offset printing method, or a flexographic printing method.

### (Adhesive Agent Layer)

The adhesive agent layer is a layer located between any layers of the laminate 20 according to the present invention. The adhesive agent layer can be formed by applying and drying a known adhesive agent (a laminating adhesive agent).

The laminating adhesive agent may be of a one-component curing type or of a two-component curing type. The laminating adhesive agent may be a solvent-based, waterbased, or emulsion adhesive agent.

Examples of the laminating adhesive agent include vinyl adhesive agents, (meth)acrylic adhesive agents, polyamide adhesive agents, polyester adhesive agents, polyether adhesive agents, polyurethane adhesive agents, epoxy adhesive agents, and rubber adhesive agents.

The application method may be, but is not limited to, a direct gravure roll coating method, a gravure roll coating method, a kiss coating method, a reverse roll coating method, a fountain method, or a transfer roll coating method.

The adhesive agent layer preferably has a thickness of 0.1 µm or more and 10 µm or less, more preferably 1 µm or more and 5 µm or less.

### (Adhesive Resin Layer)

The adhesive resin layer is a layer located between any layers of the laminate 20 according to the present invention. The adhesive resin layer is a layer formed by a melt extrusion lamination method using a thermoplastic resin. Examples of the thermoplastic resin include low-density polyethylene, medium-density polyethylene, highdensity polyethylene, linear low-density polyethylene, ethylene-acrylic acid copolymers, ethylene-ethyl acrylate copolymers, ethylene-methacrylic acid copolymers, ethylene-methyl methacrylate copolymers, ethylene-maleic acid copolymers, ionomer resins, resins produced by graft polymerization or copolymerization of a polyolefin resin with an unsaturated carboxylic acid, an unsaturated carboxylic acid, an unsaturated carboxylic anhydride, or an ester monomer, and resins produced by graft modification of a polyolefin resin with maleic anhydride. The adhesive resin layer may contain two or more thermoplastic resins.

In one embodiment, the adhesive resin layer preferably has a thickness of 0.1 µm or more and 10 µm or less, more preferably 1 µm or more and 5 µm or less.

In one embodiment, the adhesive resin layer preferably has a thickness of 5 µm or more and 100 µm or less, more preferably 10 µm or more and 50 µm or less.

### (Anchor coating layer)

The anchor coating layer is a layer located between any layers of the laminate 20 according to the present invention. The anchor coating layer can be formed by applying and drying a known anchor coating agent.

The anchor coating agent may be an anchor coating agent composed of a resin with a heat resistance temperature of 135°C or more, for example, a vinyl-modified resin, an epoxy resin, a urethane resin, a polyester resin, or the like. The anchor coating agent is particularly preferably an anchor coating agent composed of a polyacrylic or polymethacrylic resin with two or more hydroxy groups in the structure and an isocyanate compound serving as a curing agent. A silane coupling agent may be added to the anchor coating agent as an additive agent. Cellulose nitrate may be added to the anchor coating agent to enhance heat resistance.

The anchor coating layer preferably has a thickness of 0.1 µm or more and 2 µm or less, more preferably 0.2 µm or more and 1 µm or less.

### (Intermediate Layer 25)

The laminate 20 according to the present invention may include the intermediate layer 25 between the substrate layer 24 and the sealant layer 21. The intermediate layer 25 is a layer including a support layer for improving the strength or the like of the laminate 20, a gas barrier layer for improving the gas barrier properties of the laminate 20, and a metal foil. The intermediate layer 25 preferably includes a support layer.

### (Support Layer)

The support layer is a layer for improving the strength and resilience of the laminate 20.

The support layer may be a resin film (which may be an oriented film or an unoriented film) containing one or two or more of resin materials, such as polyesters (chemically recycled polyesters, mechanically recycled polyesters, fossil fuel polyesters, and biomass polyesters), (meth)acrylic resins, polyolefins, such as polyethylene, polypropylene, and polymethylpentene, vinyl resins, cellulose resins, ionomer resins, and polyamides, such as nylon 6, nylon 6,6, and poly(m-xylylene adipamide) (MXD6). The resin film is preferably an oriented film. The oriented film may be a uniaxially oriented film or a biaxially oriented film. The oriented film is preferably a biaxially oriented film in terms of dimensional stability. The support layer may be a laminated film formed by stacking these materials.

The support layer may be the paper substrate.

In one embodiment, the support layer is a resin film containing polyester.

In one embodiment, the support layer is a resin film containing polyester as a main component, and the polyester content is preferably 90% or more by mass, more preferably 95% or more by mass.

The support layer preferably contains recycled polyester as polyester. This can further reduce the environmental load of a packaging container constituted by the laminate 20 according to the present invention.

The support layer may be the polyester film 11. This can further reduce environmental load, can effectively prevent the migration of a low-molecular-weight polymer to the sealant layer 21, and can further improve the hygiene of a packaging container produced by using the laminate 20 according to the present invention.

The laminate 20 according to the present invention may include the vapor-deposited film 12 on one surface of the support layer and may further include a gas barrier coating film on the vapor-deposited film 12. The support layer and the vapor-deposited film 12 may be composed of the vapor-deposited resin film 10.

The support layer may contain an additive agent without losing the features of the present invention. Examples of the additive agent include oxygen absorbers, plasticizers, ultraviolet stabilizers, oxidation inhibitors, anti-coloring agents, matting agents, deodorants, flame retardants, weathering agents, antistatic agents, friction reducing agents, slip agents, release agents, antioxidants, ion exchangers, anti-blocking agents, and colorants.

The thickness of the support layer is not particularly limited and is preferably appropriately changed according to the intended use of the laminate 20.

The laminate 20 according to the present invention may include a print layer on one surface of the support layer.

The support layer can be stacked via an adhesive layer.

### (Gas Barrier Layer)

In one embodiment, the gas barrier layer contains a gas barrier resin. The gas barrier resin is, for example, an ethylene-vinyl alcohol copolymer (EVOH), poly(vinyl alcohol), polyacrylonitrile, a polyamide, such as nylon 6, nylon 6,6 or poly(m-xylylene adipamide) (MXD6), a polyester, a polyurethane, or a (meth)acrylic resin. The gas barrier layer may contain two or more gas barrier resins.

The gas barrier layer may contain a resin other than the gas barrier resin or may contain the additive agent.

The gas barrier layer composed of the gas barrier resin preferably has a thickness of 3 **µ**m or more and 30 **µ**m or less, more preferably 5 **µ**m or more and 20 **µ**m or less. The gas barrier layer with a thickness of 7 **µ**m or more can further improve the oxygen barrier properties and the moisture barrier properties of the laminate 20 according to the present invention.

The gas barrier layer can be formed by stacking a film composed of the gas barrier resin via an adhesive layer.

### (Metal Foil)

The laminate 20 according to the present invention may include a metal foil. This can further improve the oxygen barrier properties and the moisture barrier properties.

The metal foil may be composed of any metal, and a metal foil composed of aluminum, magnesium, or the like can be used.

The metal foil preferably has a thickness of 3 **µ**m or more and 100 **µ**m or less, more preferably 6 **µ**m or more and 25 **µ**m or less. The metal foil with a thickness of 3 **µ**m or more can further improve the oxygen barrier properties and the moisture barrier properties of the laminate 20 according to the present invention.

The metal foil can be stacked via an adhesive layer.

### (Example of Layer Structure)

An example of the layer structure of a laminate is described below. In the following example, the left side refers to the outside, and the right side refers to the inside. In the following example, the symbol "/" denotes the boundary between layers. In the following example, "Sub" denotes a substrate layer, "AdR" denotes an adhesive resin layer, "AdA" denotes an adhesive agent layer, "AC" denotes an anchor coating layer, "VaD" denotes a vapor-deposited film, "HeS" denotes a heat-sealing layer, "SAd" denotes a sticky adhesive layer, "HoM" denotes a hot-melt layer, "GaB" denotes a gas barrier coating film, "Sup" denotes a support layer, and "Pr" denotes a print layer. In the following example, "CR-PEs" denotes the polyester film 11, "PET" denotes polyethylene terephthalate, "ONY" denotes oriented nylon, "OPP" denotes oriented polypropylene, "CPP" denotes unoriented polypropylene, "PVC" denotes polyvinyl chloride, "PE" denotes polyethylene, "PEF" denotes a polyethylene film, "Al" denotes aluminum, "MO" denotes a metal oxide, and "MOR" denotes a metal alkoxide.

Examples of a laminate with a two layer structure include the following structures.
(1) Sub (CR-PEs)/VaD (MO)/GaB (MOR)/AdA/HeS (PEF)
(2) Sub (CR-PEs)/VaD (MO)/GaB (MOR)/HeS (PE)
(3) Sub (CR-PEs)/VaD (MO)/GaB (MOR)/AC/HeS (PE)
(4) Sub (CR-PEs)/VaD (MO)/GaB (MOR)/AC/AdR (PE)/HeS (PEF)
(5) Sub (CR-PEs)/VaD (Al)/SAd (sticky agent)
(6) Sub (CR-PEs)/VaD (Al)/AC/HeS (PE)
(7) Sub (CR-PEs)/VaD (MO)/GaB (MOR)/Pr/AdA/HeS (PEF)
(8) Sub (CR-PEs)/VaD (MO)/GaB (MOR)/Pr/HeS (PE)
(9) Sub (CR-PEs)/VaD (MO)/GaB (MOR)/Pr/AC/HeS (PE)
(10) Sub (CR-PEs)/VaD (MO)/GaB (MOR)/Pr/AC/AdR (PE)/HeS (PEF)
(11) Pr/Sub (CR-PEs)/VaD (Al)/SAd (sticky agent)
(12) Pr/Sub (CR-PEs)/VaD (Al)/HeS (PE)
(13) Pr/Sub (CR-PEs)/VaD (Al)/AC/HeS (PE)

Examples of a laminate with a three or more layer structure include the following structures. In the following structures, the substrate layer is the polyester film 11.
(1) Sub (CR-PEs)/VaD (MO)/GaB (MOR)/AdA/Sup (ONY)/AdA/HeS (PEF)
(2) Sub (CR-PEs)/VaD (MO)/GaB (MOR)/AdA/GaB (MOR)/VaD (MO)/Sup (PET)/AdA/HeS (CPP)
(3) Sub (CR-PEs)/VaD (MO)/GaB (MOR)/AdA/VaD (Al)/Sup (PET)/AdA/HeS (CPP)
(4) Sub (CR-PEs)/VaD (MO)/GaB (MOR)/AdA/Sup (ONY)/AdA/HeS (CPP)
(5) HeS (PEF)/AdA/GaB (MOR)/VaD (MO)/Sub (CR-PEs)/AdA/HeS (PEF)
(6) Sub (CR-PEs)/VaD (MO)/GaB (MOR)/AdA/Sup (PET)/AdA/HeS (PEF)/HoM (hot-melt adhesive)
(7) Sub (CR-PEs)/VaD (MO)/GaB (MOR)/AdA/Sup (ONY)/HeS (PE)
(8) Sub (CR-PEs)/VaD (MO)/GaB (MOR)/AdA/Sup (ONY)/AC/HeS (PE)
(9) HeS (PEF)/AdA/Sub (CR-PEs)/VaD (MO)/GaB (MOR)/AdA/HeS (PEF)
(10) Sub (CR-PEs)/VaD (MO)/GaB (MOR)/Pr/AdA/Sup (ONY)/AdA/HeS (PEF)
(11) Sub (CR-PEs)/VaD (MO)/GaB (MOR)/Pr/AdA/GaB (MOR)/VaD (MO)/Sup (PET)/AdA/HeS (CPP)
(12) Sub (CR-PEs)/VaD (MO)/GaB (MOR)/Pr/AdA/VaD (Al)/Sup (PET)/AdA/HeS (CPP)
(13) Sub (CR-PEs)/VaD (MO)/GaB (MOR)/Pr/AdA/Sup (ONY)/AdA/HeS (CPP)
(14) Sub (CR-PEs)/VaD (MO)/GaB (MOR)/Pr/AdA/Sup (PET)/AdA/HeS (PEF)/HoM (hot-melt adhesive)
(15) HeS (PEF)/AdA/GaB (MOR)/VaD (MO)/Sub (CR-PEs)/Pr/AdA/HeS (PEF)
(16) Sub (CR-PEs)/VaD (MO)/GaB (MOR)/Pr/AdA/Sup (ONY)/HeS (PE)
(17) Sub (CR-PEs)/VaD (MO)/GaB (MOR)/Pr/AdA/Sup (ONY)/AC/HeS (PE)
(18) HeS (PEF)/AdA/Sub (CR-PEs)/VaD (MO)/GaB (MOR)/Pr/AdA/HeS (PEF)

Examples of a laminate with a three or more layer structure include the following structures. In the following structures, the support layer of the intermediate layer is the polyester film 11.
(1) Sub (PET)/AdA/VaD (Al)/Sup (CR-PEs)/AdA/HeS (PEF)
(2) Sub (ONY)/AC/AdR (PE)/VaD (Al)/Sup (CR-PEs)/AC/AdR (PE)/HeS (PEF)
(3) Sub (paper)/AdA/GaB (MOR)/VaD (MO)/Sup (CR-PEs)/AdA/HeS (CPP)
(4) Sub (OPP)/AdA/GaB (MOR)/VaD (MO)/Sup (CR-PEs)/AdA/HeS (CPP)
(5) Sub (PET)/VaD (MO)/GaB (MOR)/AdA/GaB (MOR)/VaD (MO)/Sup (CR-PEs)/AdA/HeS (PEF)
(6) Sub (ONY)/AdA/GaB (MOR)/VaD (MO)/Sup (CR-PEs)/AdA/HeS (CPP)
(7) Sub (PET)/AdA/GaB (MOR)/VaD (MO)/Sup (CR-PEs)/AdA/HeS (PEF)/HoM (hot-melt adhesive)
(8) Sub (OPP)/AdA/GaB (MOR)/VaD (MO)/Sup (CR-PEs)/AdA/HeS (PEF)
(9) Sub (PET)/AdA/GaB (MOR)/VaD (MO)/Sup (CR-PEs)/AdA/HeS (CPP)
(10) Sub (paper)/AdR (PE)/GaB (MOR)/VaD (MO)/Sup (CR-PEs)/HeS (PE)
(11) Sub (paper)/AdR (PE)/GaB (MOR)/VaD (MO)/Sup (CR-PEs)/AC/HeS (PE)
(12) Sub (OPP)/AdA/GaB (MOR)/VaD (MO)/Sup (CR-PEs)/AdA/HeS (OPP)
(13) Sub (PET)/AdA/VaD (Al)/Sup (CR-PEs)/HeS (PE)
(14) Sub (PET)/AdA/VaD (Al)/Sup (CR-PEs)/AC/HeS (PE)
(15) Sub (PET)/AdA/GaB (MOR)/VaD (MO)/Sup (CR-PEs)/HeS (PE)
(16) Sub (PET)/AdA/GaB (MOR)/VaD (MO)/Sup (CR-PEs)/AC/HeS (PE)
(17) Sub (CR-PEs)/VaD (MO)/GaB (MOR)/AdA/HeS (PEF)
(18) HeS (PEF)/AdA/Sub (PET)/AdA/GaB (MOR)/VaD (MO)/Sup (CR-PEs)/AdA/HeS (PEF)
(19) HeS (PEF)/AdA/Sub (PET)/AdA/VaD (Al)/Sup (CR-PEs)/AdA/HeS (PEF)
(20) HeS (PEF)/AdA/Sub (PET)/AdA/Sup (PEF)/AdA/Sup (CR-PEs)/VaD (Al)/AdA/HeS (PEF)
(21) HeS (PEF)/AdA/Sub (PET)/AdA/Sup (PEF)/AdA/Sup (CR-PEs)/VaD (MO)/GaB (MOR)/AdA/HeS (PEF)
(22) HeS (PEF)/AdA/Sub (PET)/AdA/Sup (PEF)/AdA/VaD (Al)/Sup (CR-PEs)/AdA/HeS (PEF)
(23) HeS (PEF)/AdA/Sub (PET)/AdA/Sup (PEF)/AdA/GaB (MOR)/VaD (MO)/Sup (CR-PEs)/AdA/HeS (PEF)
(24) HeS (PE)/Sub (paper)/AdR (PE)/VaD (Al)/Sup (CR-PEs)/HeS (PE)
(25) HeS (PE)/Sub (paper)/AdR (PE)/GaB (MOR)/VaD (MO)/Sup (CR-PEs)/HeS (PE)
(26) HeS (PE)/Sub (paper)/AdR (PE)/VaD (Al)/Sup (CR-PEs)/AC/HeS (PE)
(27) HeS (PE)/Sub (paper)/AdR (PE)/GaB (MOR)/VaD (MO)/Sup (CR-PEs)/AC/HeS (PE)
(28) Sub (PET)/Pr/AdA/VaD (Al)/Sub (CR-PEs)/AdA/HeS (PEF)
(29) Sub (ONY)/Pr/AC/AdR (PE)/VaD (Al)/Sup (CR-PEs)/AC/AdR (PE)/HeS (PEF)
(30) Pr/Sub (paper)/AdA/GaB (MOR)/VaD (MO)/Sup (CR-PEs)/AdA/HeS (CPP)
(31) Sub (OPP)/Pr/AdA/GaB (MOR)/VaD (MO)/Sup (CR-PEs)/AdA/HeS (CPP)
(32) Sub (PET)/VaD (MO)/GaB (MOR)/Pr/AdA/GaB (MOR)/VaD (MO)/Sup (CR-PEs)/AdA/HeS (PEF)
(33) Sub (ONY)/Pr/AdA/GaB (MOR)/VaD (MO)/Sup (CR-PEs)/AdA/HeS (CPP)
(34) Sub (PET)/Pr/AdA/GaB (MOR)/VaD (MO)/Sup (CR-PEs)/AdA/HeS (PE)/HoM (hot-melt adhesive)
(35) Sub (OPP)/Pr/AdA/GaB (MOR)/VaD (MO)/Sup (CR-PEs)/AdA/HeS (PEF)
(36) Sub (PET)/Pr/AdA/GaB (MOR)/VaD (MO)/Sup (CR-PEs)/AdA/HeS (CPP)
(37) Pr/Sub (paper)/AdR (PE)/GaB (MOR)/VaD (MO)/Sup (CR-PEs)/HeS (PE)
(38) Pr/Sub (paper)/AdR (PE)/GaB (MOR)/VaD (MO)/Sup (CR-PEs)/AC/HeS (PE)
(39) Sub (OPP)/Pr/AdA/GaB (MOR)/VaD (MO)/Sup (CR-PEs)/AdA/HeS (OPP)
(40) Sub (PET)/Pr/AdA/VaD (Al)/Sup (CR-PEs)/HeS (PE)
(41) Sub (PET)/Pr/AdA/VaD (Al)/Sup (CR-PEs)/AC/HeS (PE)
(42) Sub (PET)/Pr/AdA/GaB (MOR)/VaD (MO)/Sup (CR-PEs)/HeS (PE)
(43) Sub (PET)/Pr/AdA/GaB (MOR)/VaD (MO)/Sup (CR-PEs)/AC/HeS (PE)
(44) Sub (CR-PEs)/VaD (MO)/GaB (MOR)/Pr/AdA/HeS (PEF)
(45) HeS (PEF)/AdA/Sub (PET)/Pr/AdA/GaB (MOR)/VaD (MO)/Sup (CR-PEs)/AdA/HeS (PEF)
(46) HeS (PEF)/AdA/Sub (PET)/Pr/AdA/VaD (Al)/Sup (CR-PEs)/AdA/HeS (PEF)
(47) HeS (PEF)/AdA/Sub (PET)/Pr/AdA/Sup (PEF)/AdA/Sup (CR-PEs)/VaD (Al)/AdA/HeS (PEF)
(48) HeS (PEF)/AdA/Sub (PET)/Pr/AdA/Sup (PEF)/AdA/Sup (CR-PEs)/VaD (MO)/GaB (MOR)/AdA/HeS (PEF)
(49) HeS (PEF)/AdA/Sub (PET)/Pr/AdA/Sup (PEF)/AdA/VaD (Al)/Sup (CR-PEs)/AdA/HeS (PEF)
(50) HeS (PEF)/AdA/Sub (PET)/Pr/AdA/Sup (PEF)/AdA/GaB (MOR)/VaD (MO)/Sup (CR-PEs)/AdA/HeS (PEF)
(51) HeS (PE)/Pr/Sub (paper)/AdR (PE)/VaD (Al)/Sup (CR-PEs)/AdA/HeS (PEF)
(52) HeS (PE)/Pr/Sub (paper)/AdR (PE)/GaB (MOR)/VaD (MO)/Sup (CR-PEs)/AdA/HeS (PEF)
(53) HeS (PE)/Pr/Sub (paper)/AdR (PE)/VaD (Al)/Sup (CR-PEs)/AC/HeS (PE)
(54) HeS (PE)/Pr/Sub (paper)/AdR (PE)/GaB (MOR)/VaD (MO)/Sup (CR-PEs)/AC/HeS (PE)

In the laminate with a three or more layer structure, both the substrate layer and the support layer of the intermediate layer may be the polyester film 11.

### (Packaging Container)

The laminate 20 according to the present invention enables the production of a packaging container with a lower environmental load and high hygiene.

The packaging container may be a packaging bag (pouch), a lid material, a laminated tube, a paper container, a paper cup, a label material, or the like.

The contents to be contained in a packaging container may be, but are not limited to, liquid, powder, or gel. The contents may be food or nonfood.

### (Packaging Bag (Pouch))

The packaging bag is, for example, a standing pouch, a pillow bag (butt sealed bag), a two sided sealed bag, a three sided sealed bag, a four sided sealed bag, a side sealed bag, an envelope sealed bag, a ribbed sealed bag, a flat bottom sealed bag, a square or rectangular bottom sealed bag, a bag with a gusset, or the like.

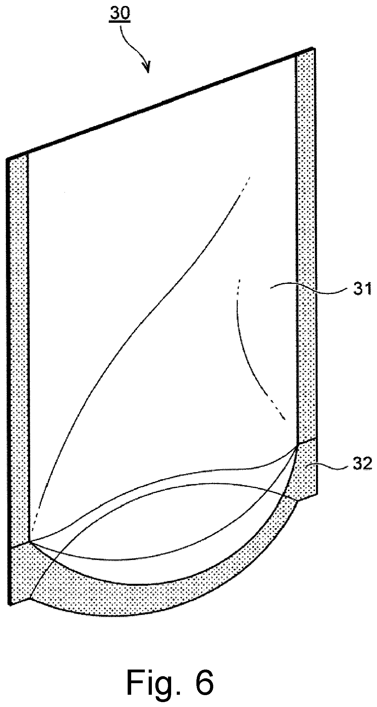

Fig. 6 schematically illustrates an example of the structure of a standing pouch 30. As illustrated in Fig. 6, the standing pouch 30 has a body 31 and a bottom 32. Hatched portions indicate heat-sealed portions (the same applies to the following drawings).

The body 31 of the standing pouch 30 is composed of the laminate 20. The bottom 32 of the standing pouch 30 may be composed of the laminate 20 or may be composed of a different material.

In one embodiment, the laminate 20 constituting the body 31 of the standing pouch 30 includes, from the outside to the inside, the polyester film 11 (the substrate layer 24), the vapor-deposited film 12, an adhesive layer, an oriented resin film (support layer), an adhesive layer, and the sealant layer 21, which is an unoriented resin film composed of polyethylene, polypropylene, or the like.

In one embodiment, the laminate 20 constituting the body 31 of the standing pouch 30 includes, from the outside to the inside, the polyester film 11 (the substrate layer 24), the vapor-deposited film 12, an adhesive layer, and the sealant layer 21, which is an unoriented resin film composed of polyethylene, polypropylene, or the like.

When the polyester film 11 includes the first polyester layer 13, the second polyester layer 14, and the third polyester layer 15, the first polyester layer 13 in the laminate 20 may be a layer located inside or outside the polyester film 11.

The vapor-deposited film 12 may be a colored vapor-deposited film composed of aluminum or the like or a transparent vapor-deposited film composed of a metal oxide, such as silicon oxide. When the vapor-deposited film 12 is a transparent vapor-deposited film, it is preferable to provide a gas barrier coating film adjacent to one surface of the vapor-deposited film.

The bottom 32 of the standing pouch 30 may also be composed of the laminate 20 with the structure described above.

The laminate 20 constituting the standing pouch 30 is only a non-limiting example.

In one embodiment, the body 31 of the standing pouch 30 can be formed by making a bag such that the sealant layer 21 of the laminate 20 according to the present invention is located inside.

In one embodiment, the bottom 32 of the standing pouch 30 can be formed by inserting the laminate 20 according to the present invention between side sheets made into a bag and heat-sealing them. More specifically, the bottom 32 can be formed by folding the laminate 20 in a V shape such that the sealant layer 21 is located outside, inserting the laminate 20 into the body 31 made into a bag, and heat-sealing them.

The heat sealing method is, for example, a known method, such as bar sealing, rotating roll sealing, belt sealing, impulse sealing, high-frequency sealing, or ultrasonic sealing.

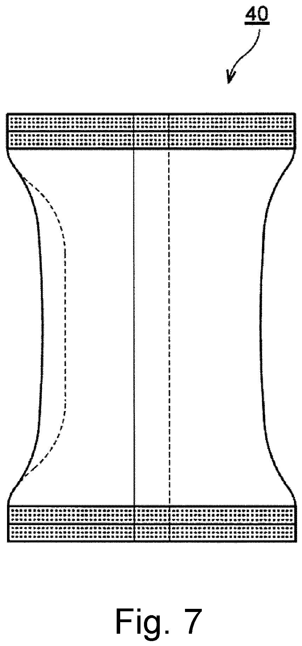

Fig. 7 is a schematic front view of an example of a pillow bag 40 as an embodiment of a packaging bag, which can be produced by making the laminate 20 into a bag such that the sealant layer 21 is the innermost layer and by heat-sealing two opposite sides.

In one embodiment, the laminate 20 constituting the pillow bag 40 includes, from the outside to the inside, the polyester film 11 (the substrate layer 24), the vapor-deposited film 12, an adhesive layer, and the sealant layer 21, which is an unoriented resin film composed of polyethylene, polypropylene, or the like.

In one embodiment, the laminate 20 constituting the pillow bag 40 includes, from the outside to the inside, the polyester film 11 (the substrate layer 24), the vapor-deposited film 12, and the sealant layer 21 formed by melt-extruding polyethylene, polypropylene, or the like.

In one embodiment, the laminate 20 constituting the pillow bag 40 includes, from the outside to the inside, the polyester film 11 (the substrate layer 24), the vapor-deposited film 12, an adhesive layer, and the sealant layer 21 formed by melt-extruding polyethylene, polypropylene, or the like.

In one embodiment, the laminate 20 constituting the pillow bag 40 includes, from the outside to the inside, the polyester film 11 (the substrate layer 24), the vapor-deposited film 12, an adhesive layer, an oriented resin film (support layer), an adhesive layer, and the sealant layer 21, which is an unoriented resin film composed of polyethylene, polypropylene, or the like.

When the polyester film 11 includes the first polyester layer 13, the second polyester layer 14, and the third polyester layer 15, the first polyester layer 13 in the laminate 20 may be a layer located inside or outside the polyester film 11.

The vapor-deposited film 12 may be a colored vapor-deposited film composed of aluminum or the like or a transparent vapor-deposited film composed of a metal oxide, such as silicon oxide. When the vapor-deposited film 12 is a transparent vapor-deposited film, it is preferable to provide a gas barrier coating film adjacent to one surface of the vapor-deposited film.

The laminate 20 constituting the pillow bag 40 is only a non-limiting example.

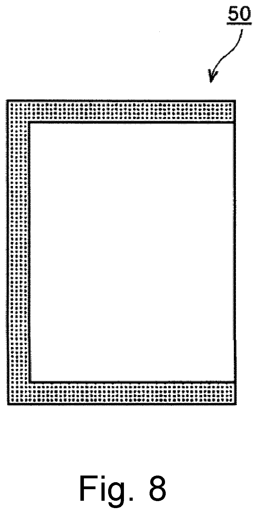

Fig. 8 is a schematic front view of an example of a three sided sealed bag 50, which can be produced by superimposing two laminates 20 such that the sealant layers 21 face each other and by heat-sealing three sides.

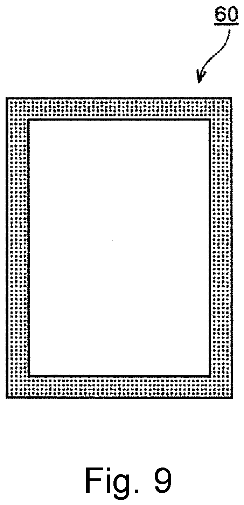

Fig. 9 is a schematic front view of an example of a four sided sealed bag 60, which can be produced by superimposing two laminates 20 such that the sealant layers 21 face each other and by heat-sealing four sides.

In one embodiment, the laminate 20 constituting the three sided sealed bag 50 or the four sided sealed bag 60 includes, from the outside to the inside, the polyester film 11 (the substrate layer 24), the vapor-deposited film 12, an adhesive layer, an oriented resin film (support layer), and the sealant layer 21 formed by melt-extruding polyethylene, polypropylene, or the like.

In one embodiment, the laminate 20 constituting the three sided sealed bag 50 or the four sided sealed bag 60 includes, from the outside to the inside, the polyester film 11 (the substrate layer 24), the vapor-deposited film 12, an adhesive layer, an oriented resin film (support layer), an adhesive layer, and the sealant layer 21 formed by melt-extruding polyethylene, polypropylene, or the like.

In one embodiment, the laminate 20 constituting the three sided sealed bag 50 or the four sided sealed bag 60 includes, from the outside to the inside, a polyester film (the substrate layer 24), a print layer, an adhesive layer, the vapor-deposited film 12, the polyester film 11 (a support layer), an adhesive layer, and the sealant layer 21, which is an unoriented resin film composed of polyethylene, polypropylene, or the like.

When the polyester film 11 includes the first polyester layer 13, the second polyester layer 14, and the third polyester layer 15, the first polyester layer 13 in the laminate 20 may be a layer located inside or outside the polyester film 11.

The "polyester film" may have the same structure as or a different structure from the "polyester film 11". The same applies to structures described below.

In one embodiment, the laminate 20 constituting the three sided sealed bag 50 or the four sided sealed bag 60 includes, from the outside to the inside, the polyester film 11 (the substrate layer 24), the vapor-deposited film 12, an adhesive layer, and the sealant layer 21, which is an unoriented resin film composed of polyethylene, polypropylene, or the like.

When the polyester film 11 includes the first polyester layer 13, the second polyester layer 14, and the third polyester layer 15, the first polyester layer 13 in the laminate 20 may be a layer located inside or outside the polyester film 11.

The vapor-deposited film 12 may be a colored vapor-deposited film composed of aluminum or the like or a transparent vapor-deposited film composed of a metal oxide, such as silicon oxide. When the vapor-deposited film 12 is a transparent vapor-deposited film, it is preferable to provide a gas barrier coating film adjacent to one surface of the vapor-deposited film.

The laminate 20 constituting the three sided sealed bag 50 or the four sided sealed bag 60 is only a non-limiting example.

### (Lid Material 70)

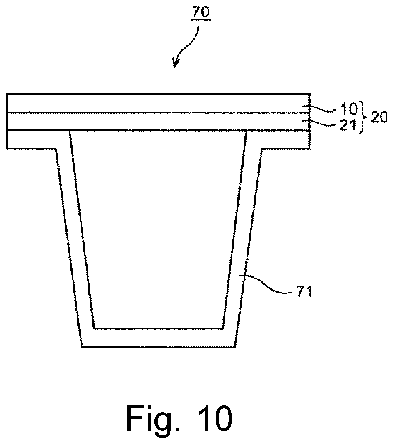

The laminate 20 according to the present invention can be used for a lid material 70 illustrated in Fig. 10.

As illustrated in Fig. 10, the laminate 20 according to the present invention is heat-sealed to a container main body 71 such that the sealant layer 21 is located inside.

The shape of the container main body 71 may be, but is not limited to, a cup shape as illustrated in Fig. 10 or a bottomed cylindrical shape.

In one embodiment, the laminate 20 constituting the lid material 70 includes, from the outside to the inside, a polyester film (the substrate layer 24), an adhesive layer, the vapor-deposited film 12, the polyester film 11 (a support layer), and the sealant layer 21 formed by melt-extruding polyethylene, polypropylene, or the like.

In one embodiment, the laminate 20 constituting the lid material 70 includes, from the outside to the inside, a polyester film (the substrate layer 24), an adhesive layer, the vapor-deposited film 12, the polyester film 11 (a support layer), an adhesive layer, and the sealant layer 21 formed by melt-extruding polyethylene, polypropylene, or the like.

In one embodiment, the laminate 20 constituting the lid material 70 includes, from the outside to the inside, the polyester film 11 (the substrate layer 24), the vapor-deposited film 12, a print layer, an adhesive layer, a polyester film (support layer), an adhesive layer, and the sealant layer 21, which is an unoriented resin film composed of polyethylene, polypropylene, or the like.

In one embodiment, the laminate 20 constituting the lid material 70 includes, from the outside to the inside, the polyester film 11 (the substrate layer 24), the vapor-deposited film 12, a print layer, an adhesive layer, and the sealant layer 21, which is an unoriented resin film composed of polyethylene, polypropylene, or the like.

When the polyester film 11 includes the first polyester layer 13, the second polyester layer 14, and the third polyester layer 15, the first polyester layer 13 in the laminate 20 may be a layer located inside or outside the polyester film 11.

The vapor-deposited film 12 may be a colored vapor-deposited film composed of aluminum or the like or a transparent vapor-deposited film composed of a metal oxide, such as silicon oxide. When the vapor-deposited film 12 is a transparent vapor-deposited film, it is preferable to provide a gas barrier coating film adjacent to one surface of the vapor-deposited film.

The laminate 20 constituting the lid material 70 is only a non-limiting example.

### (Laminated Tube 80)

The laminate 20 according to the present invention can be used as a material constituting a laminated tube 80.

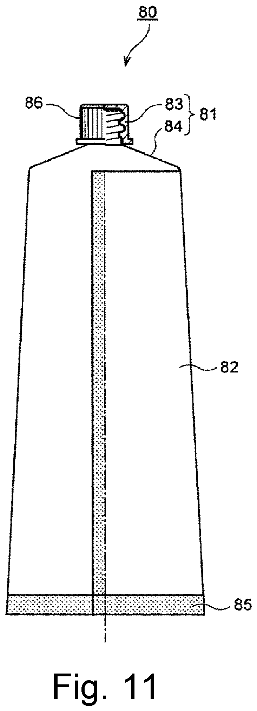

Fig. 11 is a partial cross-sectional view of an example of the laminated tube 80. As illustrated in Fig. 11, the laminated tube 80 includes a head 81 and a tubular body 82 composed of the laminate 20 according to the present invention.

As illustrated in Fig. 11, the head 81 includes an outlet portion 83 and a shoulder 84. The tubular body 82 is connected to the shoulder 84 of the head 81.

In one embodiment, the laminate 20 constituting the tubular body 82 of the laminated tube 80 includes, from the outside to the inside, the second sealant layer 23 formed by melt-extruding polyethylene, polypropylene, or the like, the polyester film 11 (the substrate layer 24), the vapor-deposited film 12, a print layer, an adhesive layer, and the first sealant layer 22, which is an unoriented resin film composed of polyethylene, polypropylene, or the like.

In one embodiment, the laminate 20 constituting the tubular body 82 of the laminated tube 80 includes, from the outside to the inside, the second sealant layer 23, which is an unoriented resin film composed of polyethylene, polypropylene, or the like, an adhesive layer, the polyester film 11 (the substrate layer 24), the vapor-deposited film 12, a print layer, an adhesive layer, and the first sealant layer 22, which is an unoriented resin film composed of polyethylene, polypropylene, or the like.

In one embodiment, the laminate 20 constituting the tubular body 82 of the laminated tube 80 includes, from the outside to the inside, the second sealant layer 23, which is an unoriented resin film composed of polyethylene, polypropylene, or the like, an adhesive layer, a polyester film (the substrate layer 24), a print layer, an adhesive layer, the vapor-deposited film 12, the polyester film 11 (a support layer), an adhesive layer, and the first sealant layer 22, which is an unoriented resin film composed of polyethylene, polypropylene, or the like.

In one embodiment, the laminate 20 constituting the tubular body 82 of the laminated tube 80 includes, from the outside to the inside, the second sealant layer 23, which is an unoriented resin film composed of polyethylene, polypropylene, or the like, an adhesive layer, a polyester film (the substrate layer 24), a print layer, an adhesive layer, a polyethylene film (a support layer), an adhesive layer, the polyester film 11 (a support layer), the vapor-deposited film 12, an adhesive layer, and the first sealant layer 22, which is an unoriented resin film composed of polyethylene, polypropylene, or the like.

In one embodiment, the laminate 20 constituting the tubular body 82 of the laminated tube 80 includes, from the outside to the inside, the second sealant layer 23, which is an unoriented resin film composed of polyethylene, polypropylene, or the like, an adhesive layer, a polyester film (the substrate layer 24), a print layer, an adhesive layer, a polyethylene film (a support layer), an adhesive layer, the vapor-deposited film 12, the polyester film 11 (a support layer), an adhesive layer, and the first sealant layer 22, which is an unoriented resin film composed of polyethylene, polypropylene, or the like.

When the polyester film 11 includes the first polyester layer 13, the second polyester layer 14, and the third polyester layer 15, the first polyester layer 13 in the laminate 20 may be a layer located inside or outside the polyester film 11.

The vapor-deposited film 12 may be a colored vapor-deposited film composed of aluminum or the like or a transparent vapor-deposited film composed of a metal oxide, such as silicon oxide. When the vapor-deposited film 12 is a transparent vapor-deposited film, it is preferable to provide a gas barrier coating film adjacent to one surface of the vapor-deposited film.

The laminate 20 constituting the tubular body 82 of the laminated tube 80 is only a non-limiting example.

In one embodiment, the tubular body 82 can be produced by superimposing the first sealant layer 22 and the second sealant layer 23 at both ends of the laminate 20 and heat-sealing the superimposed portion. The present invention is not limited to this, and the first sealant layers 22 at both ends may be heat-sealed, or the second sealant layers 23 at both ends may be heat-sealed.

The head 81 can be produced by any method, for example, by a known method. For example, the head 81 can be produced by a compression molding method (compression forming method) or an injection molding method (injection forming method) and can be joined to one open end of the tubular body 82.

After joining the head 81, the contents are supplied from the other open end, and the open end is heat-sealed to form a bottom seal 85, thereby producing the laminated tube 80.

The outlet portion 83 may have a thread for screwing a cap 86.

### (Paper Container 90)

The laminate 20 according to the present invention can be used as a material constituting a paper container 90.

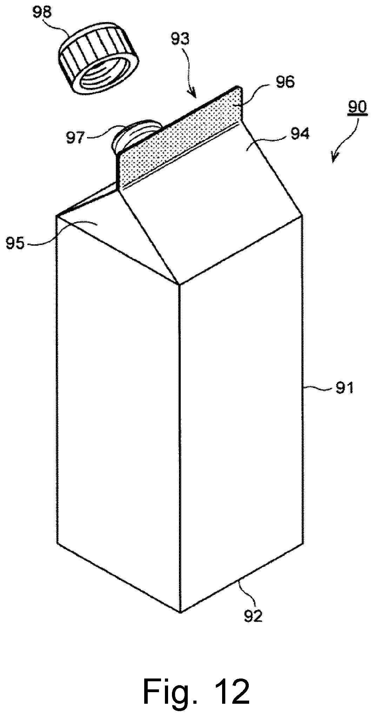

Fig. 12 is a perspective view of an example of the paper container 90.

The paper container 90 includes a body 91, a bottom 92, and an upper portion 93.

The paper container 90 has a square tubular body 91 in Fig. 12 but is not limited to this.

In one embodiment, the upper portion 93 includes a pair of folded portions 95 located and folded between a pair of inclined sheets 94 facing each other.

Each of the inclined sheets 94 has a margin 96 at the upper end thereof, and the margins 96 are bonded together.

In one embodiment, one of the inclined sheets 94 of the upper portion 93 has an outlet 97 to which a cap 98 can be attached. The outlet 97 may be omitted.

In one embodiment, the laminate 20 constituting the paper container 90 includes, from the outside to the inside, the second sealant layer 23 formed by melt-extruding polyethylene, polypropylene, or the like, a print layer, a paper substrate, an adhesive layer, the vapor-deposited film 12, the polyester film 11 (a support layer), an adhesive layer, and the first sealant layer 22, which is an unoriented resin film composed of polyethylene, polypropylene, or the like.

When the polyester film 11 includes the first polyester layer 13, the second polyester layer 14, and the third polyester layer 15, the first polyester layer 13 in the laminate 20 may be a layer located inside or outside the polyester film 11.

The vapor-deposited film 12 may be a colored vapor-deposited film composed of aluminum or the like or a transparent vapor-deposited film composed of a metal oxide, such as silicon oxide. When the vapor-deposited film 12 is a transparent vapor-deposited film, it is preferable to provide a gas barrier coating film adjacent to one surface of the vapor-deposited film.

The laminate 20 constituting the tubular body 91 of the paper container 90 is only a non-limiting example.

The paper container 90 can be produced by making the package by a known method. Furthermore, the shape of the paper container is not limited to the gable top type illustrated in Fig. 12, but may be appropriately changed to a brick type or the like depending on the contents to be supplied.

### (Paper Cup 100)

The laminate 20 according to the present invention can be used as a material constituting a paper cup 100.

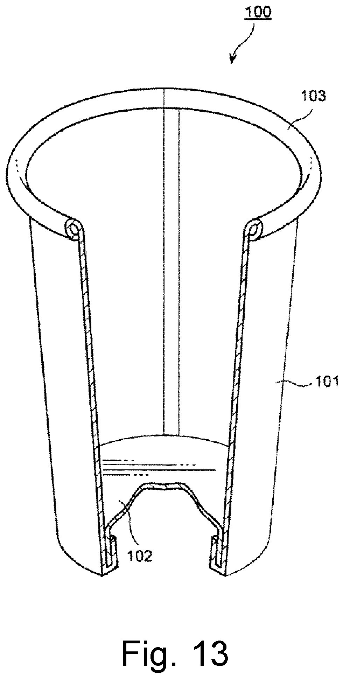

Fig. 13 is a perspective view of an example of the paper cup 100 from which a portion is removed.

As illustrated in Fig. 13, the paper cup 100 includes a body 101 and a bottom 102. Although the cylindrical body 101 expands gradually toward the opening in Fig. 13, the present invention is not limited to this.

In one embodiment, as illustrated in Fig. 13, the body 101 has a flange 103 with an opening end rounded outward.

In one embodiment, the paper cup 100 may have a lid material (not shown) adhered along the flange 103.

In one embodiment, the laminate 20 constituting the paper cup 100 includes, from the outside to the inside, a print layer, a paper substrate, an adhesive layer, the vapor-deposited film 12, the polyester film 11 (a support layer), and the sealant layer 21 formed by melt-extruding polyethylene, polypropylene, or the like.

In one embodiment, the laminate 20 constituting the paper cup 100 includes, from the outside to the inside, a print layer, a paper substrate, an adhesive layer, the vapor-deposited film 12, the polyester film 11 (a support layer), an adhesive layer, and the sealant layer 21 formed by melt-extruding polyethylene, polypropylene, or the like.

In one embodiment, the laminate 20 constituting the paper cup 100 includes, from the outside to the inside, the second sealant layer 23 formed by melt-extruding polyethylene, polypropylene, or the like, a print layer, a paper substrate, an adhesive layer, the vapor-deposited film 12, the polyester film 11 (a support layer), and the first sealant layer 22 formed by melt-extruding polyethylene, polypropylene, or the like.

In one embodiment, the laminate 20 constituting the paper cup 100 includes, from the outside to the inside, the second sealant layer 23 formed by melt-extruding polyethylene, polypropylene, or the like, a print layer, a paper substrate, an adhesive layer, the vapor-deposited film 12, the polyester film 11 (a support layer), an adhesive layer, and the first sealant layer 22 formed by melt-extruding polyethylene, polypropylene, or the like.

When the polyester film 11 includes the first polyester layer 13, the second polyester layer 14, and the third polyester layer 15, the first polyester layer 13 in the laminate 20 may be a layer located inside or outside the polyester film 11.

The vapor-deposited film 12 may be a colored vapor-deposited film composed of aluminum or the like or a transparent vapor-deposited film composed of a metal oxide, such as silicon oxide. When the vapor-deposited film 12 is a transparent vapor-deposited film, it is preferable to provide a gas barrier coating film adjacent to one surface of the vapor-deposited film.

The laminate 20 constituting the paper cup 100 is only a non-limiting example.

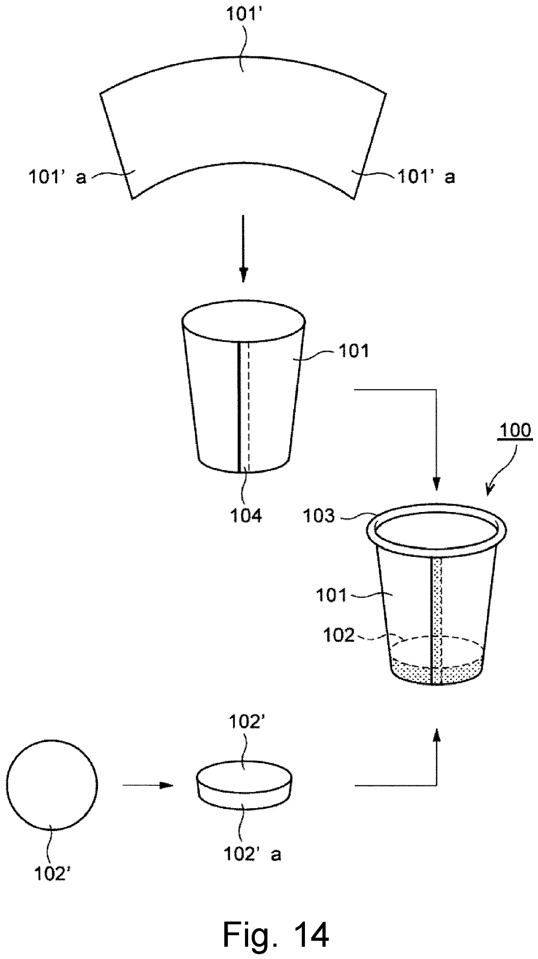

An example of a method for producing the paper cup 100 is described below with reference to Fig. 14.

First, as illustrated in Fig. 14, the laminate 20 according to the present invention is cut to produce a fan-shaped body blank 101'. The body blank 101' is then rolled into a cylindrical shape, and both ends 101'a are overlapped and heat-sealed to form a body attaching portion 104.

The laminate 20 according to the present invention is then cut to produce a circular bottom blank 102', and then the outer peripheral edge thereof is bent downward to form a bent portion 102'a.

The bent portion 102'a of the bottom blank 102' is then fitted into the lower end of the body blank 101' such that the bent portion 102'a is wrapped in the lower end, and is heat-sealed to produce the paper cup 100.

If desired, the open end of the body may be rolled outward to form the flange 103.

### EXAMPLES

The present invention is more specifically described in the following examples. However, the present invention is not limited to these examples without departing from the gist of the present invention.

### (Example 1-1)

A chemically recycled polyethylene terephthalate and a fossil fuel polyethylene terephthalate were mixed in a ratio of 5:5 based on mass. This PET mixture was extruded into a film by a T-die method and was then biaxially oriented to produce a polyester film 11 with a thickness of 12 **µ**m.

An aluminum oxide vapor-deposited film 12 with a thickness of 20 nm was formed on one surface of the polyester film 11 by a PVD method to produce a vapor-deposited resin film 10 according to the present invention.

### (Example 1-2)

A chemically recycled polyethylene terephthalate and a fossil fuel polyethylene terephthalate were mixed in a ratio of 7:3 based on mass. This PET mixture was extruded into a film by a T-die method and was then biaxially oriented to produce a polyester film 11 with a thickness of 12 **µ**m.

An aluminum oxide vapor-deposited film 12 with a thickness of 20 nm was formed on one surface of the polyester film 11 by the PVD method to produce a vapor-deposited resin film 10 according to the present invention.

### (Example 1-3)

A chemically recycled polyethylene terephthalate and a blend resin of a chemically recycled polyester and a fossil fuel polyethylene terephthalate were coextruded to form a film, which was then biaxially oriented to produce a polyester film 11 that included a first polyester layer 13 with a thickness of 3 **µ**m composed of the chemically recycled polyester, a second polyester layer 14 with a thickness of 6 **µ**m composed of the blend resin, and a third polyester layer 15 with a thickness of 3 **µ**m composed of the chemically recycled polyester.

An aluminum oxide vapor-deposited film 12 with a thickness of 20 nm was formed on a surface of the third polyester layer 15 of the polyester film 11 by the PVD method to produce a vapor-deposited resin film 10 according to the present invention.

### (Comparative Example 1-1)

A fossil fuel polyethylene terephthalate was extruded by the T-die method to form a film, which was then biaxially oriented to produce a polyester film with a thickness of 12 **µ**m.

An aluminum oxide vapor-deposited film with a thickness of 20 nm was formed on one surface of the polyester film by the PVD method to produce a vapor-deposited resin film.

### <<Measurement of Constituent Ratio of Low-molecular-weight Component>>

10 g of each polyester film produced in the examples and comparative examples was cut out and weighed in a 30-mL vial. A HFIP/chloroform liquid mixture was added to the vial and was allowed to stand for 12 hours for dissolution.

After standing, chloroform was added for dilution to prepare a 0.1% solution.

This solution was filtered through a 0.45-µm hydrophilic PTFE membrane filter cartridge (Millex-LH manufactured by Merck Millipore), and the filtrate was subjected to GPC measurement under the following conditions.

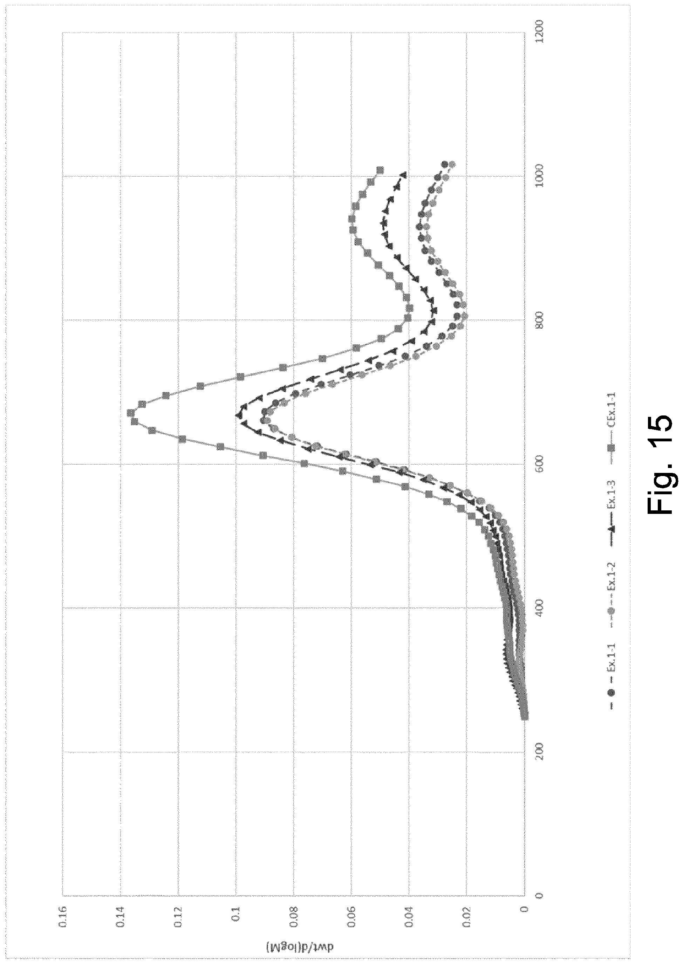

In a molecular weight distribution curve thus measured, the area percentage of a region with a molecular weight of 1,000 or less was determined. Table 1 shows the area percentage of the region with a molecular weight of 1,000 or less. Fig. 15 shows a molecular weight distribution curve of the region with a molecular weight of 1,000 or less.

### (Measurement Conditions)

- Columns used: 2 X PLgel 5**µ** MIXED (7.5 mm x 300 mm) manufactured by Agilent Technologies
- Column temperature: 40°C
- Mobile phase: chloroform (manufactured by FUJIFILM Wako Pure Chemical Corporation, for liquid chromatography)
- Flow rate: 1.0 mL/min
- Injection volume: 2.5 **µ**L
- Detection: 254 nm (UV-visible detector)
- Molecular weight calibration: monodisperse polystyrene (PS-1 manufactured by Agilent Technologies)
- Apparatus: 515 HPLC pump, 717 plus automatic injector, UV-visible detector (manufactured by Waters Corporation)

### <<Measurement of Cyclic Trimer Content>>

The polyester films produced in the examples and comparative examples were prepared. Approximately 0.1 g of a sample was taken from the polyester film and was dissolved in a liquid mixture of hexafluoroisopropanol (HFIP) and chloroform. Acetonitrile was added to this solution to precipitate a polymer, and the precipitate was filtered. The filtrate was evaporated to dryness, and the residue was dissolved in dimethylformamide (DMF). This solution was analyzed by high-performance liquid chromatography (HPLC) to determine the cyclic trimer content. Table 1 shows the measurement results. The measurement conditions are as follows:

### (Measurement Conditions)

- Apparatus: LC-20 manufactured by Shimadzu Corporation
- Column used: Develosil ODS-HG-33**µ** (4.6 x 150 mm) manufactured by Nomura Chemical Co., Ltd.
- Column temperature: 40°C
- Mobile phase: 0.5% by volume aqueous acetic acid/acetonitrile (gradient)
- Flow rate: 1.0 mL/min
- Injection volume: 15 **µ**L
- Detection: 254 nm (UV-visible detector)
- Apparatus: LC-20 manufactured by Shimadzu Corporation

### <<Measurement of Crystallization Temperature and Melting Point>>

Each of the polyester films produced in the examples and comparative examples was cut into a 5-mg sample.

This sample was heated from 20°C to 300°C at a rate of 10°C/min and was held at 300°C for 5 minutes. The sample was then cooled from 300°C to 20°C at a rate of -10°C/min. The sample was then held at 20°C for 5 minutes. The sample was heated again from 20°C to 300°C at a rate of 10°C/min. Thus, a melting curve was obtained.

A main peak in the cooling stage of this melting curve was taken as a crystallization temperature, and a main peak in the second heating stage was taken as a melting point. Table 1 shows the crystallization temperatures and melting points.

### <<Measurement of Static Friction Coefficient>>

Each of the vapor-deposited resin films produced in the examples and comparative examples was cut to prepare a 200 mm x 150 mm test specimen.

The test specimen was then fixed to a sliding table of a testing machine with a cellophane adhesive tape such that the polyester film (the first polyester layer in Example 1-3) faced upward.

Each vapor-deposited resin film was then cut into a 70 mm x 100 mm test specimen. The test specimen was wound around a 63 mm x 63 mm x 6.3 mm metal thread (weight: 200 g) such that the vapor-deposited film was located inside and the polyester film (the first polyester layer in Example 1-3) was located outside.

The test specimen was then placed on the fixed vapor-deposited resin film such that the polyester films (the first polyester layers in Example 1-3) were in contact with each other.

In an environment of 23°C and 50% relative humidity, the metal thread around which the test specimen was wound was then slid at a speed of 100 mm/min and was measured with a friction measuring instrument (TR-2 manufactured by Toyo Seiki Seisaku-Sho, Ltd.). Table 1 shows the measurement results.

### <Evaluation of Hygiene>

The polyester films produced in the examples and comparative examples were prepared. The vapor-deposited resin films were cut to prepare 200 mm x 200 mm test specimens.

A 100-mL glass flask was filled with 80 mL of ion-exchanged water, and a test specimen was put into the glass flask.

The opening of the glass flask was then covered with aluminum foil, and the glass flask was placed in a water bath and was heated at 80°C for 60 minutes.

After the glass flask was cooled to room temperature, three panelists checked for a change in the taste of the ion-exchanged water due to the treatment. Ion-exchanged water mixed with a low-molecular-weight component has a change in taste. Thus, a polyester film with no change in the taste of the ion-exchanged water can prevent a low-molecular-weight component from mixing into the ion-exchanged water and has high hygiene. Hygiene was evaluated in accordance with the following evaluation criteria. Table 2 shows the evaluation results. In Reference Example 1-1, the above was performed without using a test specimen.

### <Evaluation Criteria>

A: All the three panelists did not notice a change in taste.
B: Two of the three panelists did not notice a change in taste.
NG: At least two of the three panelists noticed a change in taste.

**[Table 1]**

| Table 1 | Area percentage of region with molecular weight of 1,000 or less in molecular weight distribution curve measured by GPC of polyester film | Cyclic trimer content | Crystallization temperature | Melting point | Static friction coefficient |
|---|---|---|---|---|---|
| Example 1-1 | 1.32% | 1.000% by mass | 192.3°C | 247.4°C | 0.42 |
| Example 1-2 | 1.25% | 1.010% by mass | 194.5°C | 247.2°C | 0.40 |
| Example 1-3 | 1.65% | 0.733% by mass | 194.8°C | 247.3°C | 0.41 |
| Comparative example 1-1 | 1.94% | 1.060% by mass | 205.3°C | 252.5°C | 0.29 |

**[Table 2]**

| Table 2 | Hygiene |
|---|---|
| Example 1-1 | A |
| Example 1-2 | A |
| Example 1-3 | A |
| Comparative example 1-1 | NG |
| Reference Example 1-1 | A |

### (Example 2-1)

A vapor-deposited resin film 10 was prepared in the same manner as in Example 1-1. The vapor-deposited resin film 10 and a biaxially oriented nylon film were bonded together by a dry lamination method using a two-component curing adhesive agent (main agent TM556/curing agent CAT56 manufactured by Toyo-Morton, Ltd.). The biaxially oriented nylon film of this dry laminated film and an unoriented polyethylene film were bonded together by the dry lamination method using a two-component curing adhesive agent.

Thus, a laminate 20 of the vapor-deposited resin film 10, an adhesive agent layer, the biaxially oriented nylon film, an adhesive agent layer, and a sealant layer stacked in order was produced. The vapor-deposited film 12 of the vapor-deposited resin film 10 is located on the adhesive agent layer side.

### (Example 2-2)

The laminate 20 was produced in the same manner as in Example 2-1 except that the vapor-deposited resin film 10 of Example 1-3 was used as the vapor-deposited resin film 10.

### (Comparative Example 2-1)

A vapor-deposited resin film was prepared in the same manner as in Comparative Example 1-1. A laminate was produced in the same manner as in Example 2-1 except that this vapor-deposited resin film was used as the vapor-deposited resin film 10.

### <<Measurement of Oxygen Permeability>>

The laminates produced in Examples 2-1 and 2-2 and Comparative Example 2-1 were used to measure oxygen permeability. The oxygen permeability was measured by a JIS K 7126 method at a temperature of 23°C and at a relative humidity of 90% with an oxygen permeability measuring apparatus (manufactured by Modern Controls, Inc (MOCON) [model name: OX-TRAN 2/21]). Table 3 shows the measurement results.

### <<Measurement of Water Vapor Permeability>>

The laminates produced in Examples 2-1 and 2-2 and Comparative Example 2-1 were used to measure water vapor permeability. The water vapor permeability was measured by a JIS K 7129 method at a temperature of 40°C and at a relative humidity of 90% with a water vapor permeability measuring apparatus (a measuring apparatus manufactured by MOCON, Inc. [model name: PERMATRAN 3/33]). Table 3 shows the measurement results.

**[Table 3]**

| Table 3 | Oxygen permeability (cc/m² · day · atm) | Water vapor permeability (g/m²/day) |
|---|---|---|
| Example 2-1 | 0.12 | 0.07 |
| Example 2-2 | 0.12 | 0.07 |
| Comparative example 2-1 | 0.13 | 0.16 |

### Reference Signs List

- 10: vapor-deposited resin film
- 11: polyester film
- 12: vapor-deposited film
- 13: first polyester layer
- 14: second polyester layer
- 15: third polyester layer
- 20: laminate
- 21: sealant layer
- 22: first sealant layer
- 23: second sealant layer
- 24: substrate layer
- 25: intermediate layer
- 30: standing pouch
- 31: body
- 32: bottom
- 40: pillow bag
- 50: three sided sealed bag
- 60: four sided sealed bag
- 70: lid material
- 71: container main body
- 80: laminated tube
- 81: head
- 82: tubular body
- 83: outlet portion
- 84: shoulder
- 85: bottom seal
- 86: cap
- 90: paper container
- 91: body
- 92: bottom
- 93: upper portion
- 94: inclined sheet
- 95: folded portion
- 96: margin
- 97: outlet
- 98: cap
- 100: paper cup
- 101: body
- 101': body blank
- 101'a: both ends of body blank
- 102: bottom
- 102': bottom blank
- 102'a: bent portion
- 103: flange
- 104: body attaching portion

## Claims

1. A vapor-deposited resin film comprising: a polyester film; and a vapor-deposited film,
wherein the polyester film contains a chemically recycled polyester,
the polyester film contains the chemically recycled polyester as a main component, and
a region with a molecular weight of 1,000 or less in a molecular weight distribution curve measured by GPC of the polyester film is 1.8% or less by area of a total peak area.

2. The vapor-deposited resin film according to Claim 1, wherein the polyester film contains the chemically recycled polyester as a main component.

3. The vapor-deposited resin film according to Claim 2, wherein the chemically recycled polyester is composed of the chemically recycled polyethylene terephthalate.

4. The vapor-deposited resin film according to Claim 1, wherein the polyester film includes
a first polyester layer containing the chemically recycled polyester as a main component,
a second polyester layer containing the chemically recycled polyester and at least one selected from the group consisting of mechanically recycled polyesters, fossil fuel polyesters, and biomass polyesters, and
a third polyester layer containing the chemically recycled polyester as a main component.

5. The vapor-deposited resin film according to Claim 4, wherein each layer of the polyester film has a polyester content 90% or more by mass and 100% or less by mass.

6. The vapor-deposited resin film according to Claim 1, wherein the polyester film contains the chemically recycled polyester and at least one selected from the group consisting of mechanically recycled polyesters, fossil fuel polyesters, and biomass polyesters.

7. The vapor-deposited resin film according to any one of Claims 4 to 6, wherein the chemically recycled polyester, the mechanically recycled polyesters, the fossil fuel polyesters, and the biomass polyesters are polyethylene terephthalate.

8. The vapor-deposited resin film according to any one of Claims 1 to 7, wherein the polyester film has a melting point of 250°C or less.

9. The vapor-deposited resin film according to any one of Claims 1 to 8, wherein the polyester film has a crystallization temperature of 196°C or less.

10. The vapor-deposited resin film according to any one of Claims 1 to 9, wherein a surface of the polyester film on which no vapor-deposited film is formed has a static friction coefficient of 0.35 or more.

11. The vapor-deposited resin film according to any one of Claims 1 to 10, wherein the polyester film has a polyester content of 90% or more by mass and 100% or less by mass.

12. A laminate comprising:
the vapor-deposited resin film according to any one of Claims 1 to 11; and
a sealant layer or a sticky adhesive layer inside the vapor-deposited resin film.

13. The laminate according to Claim 12, wherein
the laminate includes a substrate layer, a vapor-deposited film, an intermediate layer, and the sealant layer or the sticky adhesive layer, and
the substrate layer and the vapor-deposited film are composed of the vapor-deposited resin film.

14. The laminate according to Claim 12, wherein
the laminate includes a substrate layer, a vapor-deposited film, an intermediate layer, and the sealant layer or the sticky adhesive layer,
the intermediate layer includes a support layer, and
the support layer and the vapor-deposited film are composed of the vapor-deposited resin film.

15. A packaging container comprising the laminate according to any one of Claims 12 to 14.
